(19) Europäisches Patentamt / European Patent Office / Office européen des brevets

(11) **EP 3 289 875 B1**

(12) **EUROPEAN PATENT SPECIFICATION**

(45) Date of publication and mention
of the grant of the patent:
**09.06.2021 Bulletin 2021/23**

(21) Application number: **16786477.6**

(22) Date of filing: **26.04.2016**

(51) Int Cl.:
*A01P 3/00* (2006.01)        *A01M 99/00* (2006.01)
*A01N 25/00* (2006.01)        *A01N 37/02* (2006.01)
*A01N 37/32* (2006.01)        *A01N 43/40* (2006.01)
*A01N 43/50* (2006.01)        *A01N 43/56* (2006.01)
*A01N 43/653* (2006.01)        *A01N 45/02* (2006.01)
*A01N 47/38* (2006.01)

(86) International application number:
**PCT/JP2016/063027**

(87) International publication number:
**WO 2016/175200 (03.11.2016 Gazette 2016/44)**

(54) **USE OF PLANT DISEASE CONTROL AGENTS**

VERWENDUNG VON PFLANZENSCHÄDLINGSBEKÄMPFUNGSMITTELN

UTILISATIONS DES AGENTS DE LUTTE CONTRE LES MALADIES DE PLANTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2015 JP 2015090153**

(43) Date of publication of application:
**07.03.2018 Bulletin 2018/10**

(73) Proprietor: **Nihon Nohyaku Co., Ltd.
Tokyo 104-8386 (JP)**

(72) Inventors:
• **OKADA, Atsushi**
  **Kawachinagano-shi**
  **Osaka 586-0094 (JP)**
• **HAKUNO, Fumiaki**
  **Kawachinagano-shi**
  **Osaka 586-0094 (JP)**

(74) Representative: **Grünecker Patent- und
Rechtsanwälte
PartG mbB
Leopoldstraße 4
80802 München (DE)**

(56) References cited:
EP-A1- 3 135 111        WO-A1-2006/082723
WO-A1-2012/077077        WO-A1-2014/066120
WO-A1-2015/005355        WO-A2-2010/029030
JP-A- 2003 246 704        JP-A- 2010 517 974
JP-A- 2011 201 858        JP-B1- S4 817 052

• **KAWADA, S. ET AL.: 'STUDIES ON THE
  FUNGICIDAL PROPERTIES OF A NEW
  BROAD-SPECTRUM
  FUNGICIDE, N-P-FLUOROPHENYL-2,3-DICHLOR
  OMALE IMIDE' KEMIA vol. 1, no. 9, 01 January
  1974, pages 593 - 595, XP008184748**
• **MASATAKA TSUDA ET AL.: 'Biochemical Effects
  of N-p-Fluorophenyl-2,3-dichloromaleimide on
  Pyricularia oryzae' JOURNAL OF PESTICIDE
  SCIENCE vol. 1, no. 2, 1976, pages 101 - 106,
  XP055231035**
• **'A NEW FUNGICIDE SPARTCIDE W.P' JAPAN
  PESTICIDE INFORMATION vol. 34, 01 January
  1978, pages 26 - 28, XP008184741**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 289 875 B1

## Description

### Technical Field

The present invention relates to an agent for controlling plant diseases which damage cereals and use thereof.

### Background Art

Disease control is very important for stable cereal production in Europe. For this purpose, a huge number of fungicide have been developed and used so far. However, the dependence on specific agrochemicals for disease control has caused the emergence of resistant pathogens, and also the tendency of disease infestation has greatly changed. That is, the major target diseases to be controlled in the 1980s were powdery mildew, rust and glume blotch, but since the 2000s, leaf blotch has become a major disease to be controlled (see, for example, Non Patent Literature 1). Presently, the development of control agents against leaf blotch is one of the biggest concerns in the agrochemical industry in Europe.

Fluoroimide (see, for example, Patent Literature 1) is a known compound which is effective against diseases of fruit trees and vegetables. However, it is unknown whether fluoroimide is effective against diseases of cereals (see, for example, Patent Literature 1 and Non Patent Literature 2).

WO-A-2010029030 relates to a fungicidal mixture comprising a fluorinated thiazolydinyl derivative in combination with at least one further compound in synergistically effective amounts. WO-A-2014066120 discloses a tolyl derivative having fungicidal activity which is combined with another fungicide such as fluoroimide and their use as fungizides.

JP 2011-201858 provides a composition comprising an amide compound and one or more fungicidal compounds selected from the group (A), which has excellent controlling efficacies against the plant diseases. The group (A) consists of fludioxonil, ametoctradin, chloroneb, chlorothalonil, oxine-copper, cyflufenamid, dichlofluanid, dicloran, diethofencarb, dinocap, dithianon, edifenphos, fenaminosulf, fentin, fluazinam, fluoroimide, flusulfamide, flutianil, fosetyl-Al, hydrargaphen, iprobenfos, metrafenone, milneb, penflufen, phosdiphen, phthalide, prothiocarb, pyrazophos, sedaxane, silthiofam, spiroxamine, tebufloquin, and tolyfluanid.

WO-A-2012077077 discloses fungicidal mixtures which comprise pyraclostrobin in combination with a fungicidal compound selected from compounds including *inter alia* fluoroimide.

### Citation List

#### Patent Literature

Patent Literature 1: United States Patent No. 3734927

#### Non Patent Literature

Non Patent Literature 1: European and Mediterranean Plant Protection Organization, Dec 2010, EPPO Workshop on Azole fungicides and Septoria leaf blotch control: K. Stenzel Non Patent Literature 2: The Pesticide Manual 15th edition (British Crop Production Council, 2013)

### Summary of Invention

#### Technical Problem

Control agents against leaf blotch are small in number among control agents against cereal diseases and are not sufficiently effective. Therefore, the development of novel control agents against leaf blotch is desired.

#### Solution to Problem

The present inventors conducted extensive research to solve the above-described problems. As a result, the present inventors found that the combination of fluoroimide and one or more compounds selected from the group consisting of (1) SBI agents and (2) SDHI agents fungicides can synergistically control diseases (in particular, leaf blotch) of cereal plants at a lower dosage than when each is used alone. Based on this finding, the present inventor completed the present invention.

The subject matter of the invention is as set out in the appended claims.

The present invention relates to the following.

Use of fluoroimide or an agrochemically acceptable salt thereof and one or more compounds selected from the group consisting of (1) SBI agents, and (2) SDHI agents or agrochemically acceptable salts thereof for controlling cereal plant diseases, wherein the SBI agent is one or more DMI agents selected from the group consisting of:

an imidazole, which is prochloraz; and

at least one triazole selected from the group consisting of propiconazole, tebuconazole, difenoconazole, metconazole,

epoxiconazole and prothioconazole, and

the SDHI agent is one or more compounds selected from the group consisting of:

at least one pyrazole carboxamide selected from the group consisting of bixafen, fluxapyroxad and isopyrazam; and

a pyridine carboxamide, which is boscalid.

In a preferred embodiment in combination with any of the above and below embodiments, the cereal plant is at least one selected from the group consisting of wheat and barley.

In a further preferred embodiment in combination with any of the above and below embodiments, the cereal plant disease pathogen is at least one selected from the group consisting of:

(a1) *Ascochyta tritici,* a causal agent of Ascochyta leaf spot of wheat,
(a2) *Blumeria graminis,* a causal agent of powdery mildew of cereals,
(a3) *Cladosporium herbarum,* a causal agent of black mold,
(a4) *Cochliobolus sativus,* a causal agent of poaceous spot blotch,
(a5) *Epicoccum* spp., a causal agent of glume spot,
(a6) *Erysiphe graminis,* a causal agent of powdery mildew of wheat and barley,
(a7) *Fusarium graminearum,* a causal agent of Fusarium ear blight of wheat and barley,
(a8) *Fusarium culmorum,* a causal agent of root rot,
(a9) *Gaeumannomyces graminis,* a causal agent of take-all root rot,
(a10) *Leptosphaeria nodorum,* a causal agent of glume blotch,
(a11) *Microdochium nivale,* a causal agent of pink snow mold,
(a12) *Pseudocercospora herpotrichoides,*
(a13) *Pseudocercosporella herpotrichoides,* a causal agent of eyespot,
(a14) *Puccinia striiformis,* a causal agent of rust,
(a15) *Puccinia triticina,* a causal agent of leaf rust,
(a16) *Puccinia hordei,* a causal agent of dwarf leaf rust of barley,
(a17) *Puccinia recondita,* a causal agent of leaf rust of wheat,
(a18) *Pyrenophora graminea,* a causal agent of stripe,
(a19) *Pyrenophora teres,* a causal agent of net blotch,
(a20) *Pyrenophora tritici repentis,* a causal agent of yellow leaf spot of wheat,
(a21) *Ramularia collo-cygni,* a causal agent of physiological leaf spots,
(a22) *Rhizoctonia solani,* a causal agent of root rot/stem rot,
(a23) *Rhizoctonia cerealis,* a causal agent of yellow patch,
(a24) *Rhynchosporium secalis,* a causal agent of scald,
(a25) *Septoria nodorum,* a causal agent of glume blotch of wheat, (a26) *Septoria tritici,* a causal agent of wheat leaf blotch,
(a27) *Stagonospora nodorum,* a species of the class Loculoascomycetes,
(a28) *Tilletia caries,* a causal agent of stinking smut,
(a29) *Typhula incarnata,* a causal agent of snow mold,
(a30) *Ustilago avenae,* a causal agent of loose smut of oat and
(a31) *Ustilago nuda,* a causal agent of loose smut of wheat.

In a more preferred embodiment, the cereal plant disease pathogen is at least one selected from the group consisting of:

(a3) *Cladosporium herbarum,* a causal agent of black mold,

(a4) *Cochliobolus sativus,* a causal agent of poaceous spot blotch,

(a5) *Epicoccum* spp., a causal agent of glume spot,

(a7) *Fusarium graminearum,* a causal agent of Fusarium ear blight of wheat and barley,

(a8) *Fusarium culmorum,* a causal agent of root rot,

(a9) *Gaeumannomyces graminis,* a causal agent of take-all root rot,

(a10) *Leptosphaeria nodorum,* a causal agent of glume blotch,

(a11) *Microdochium nivale,* a causal agent of pink snow mold,

(a12) *Pseudocercospora herpotrichoides,*

(a13) *Pseudocercosporella herpotrichoides,* a causal agent of eyespot,

(a18) *Pyrenophora graminea,* a causal agent of stripe,

(a19) *Pyrenophora teres,* a causal agent of net blotch,

(a20) *Pyrenophora tritici repentis,* a causal agent of yellow leaf spot of wheat,

(a21) *Ramularia collo-cygni,* a causal agent of physiological leaf spots,

(a24) *Rhynchosporium secalis,* a causal agent of scald,

(a25) *Septoria nodorum,* a causal agent of glume blotch of wheat,

(a26) *Septoria tritici,* a causal agent of wheat leaf blotch,

(a27) *Stagonospora nodorum,* a species of the class Loculoascomycetes,

(a28) *Tilletia caries,* a causal agent of stinking smut,

(a29) *Typhula incarnata,* a causal agent of snow mold,

(a30) *Ustilago avenae,* a causal agent of loose smut of oat and

(a31) *Ustilago nuda,* a causal agent of loose smut of wheat.

In a further more preferred embodiment, the cereal plant disease pathogen is at least one selected from the group consisting of:

(a7) *Fusarium graminearum,* a causal agent of Fusarium ear blight of wheat and barley,

(a10) *Leptosphaeria nodorum,* a causal agent of glume blotch,

(a12) *Pseudocercospora herpotrichoides,*

(a13) *Pseudocercosporella herpotrichoides,* a causal agent of eyespot,

(a25) *Septoria nodorum,* a causal agent of glume blotch of wheat and

(a26) *Septoria tritici,* a causal agent of leaf blotch.

In a most preferred embodiment, the cereal plant disease pathogen is at least one selected from *Septoria* spp.

In a further most preferred embodiment, the cereal plant disease pathogen is *Septoria tritici,* a causal agent of leaf blotch.

The present invention further relates to a method for controlling cereal plant diseases comprising applying fluoroimide or an agrochemically acceptable salt thereof and one or more compounds selected from the group consisting of (1) SBI agents, and (2) SDHI agents or agrochemically acceptable salts thereof to at least one selected from the group consisting of a cereal plant, soil in the vicinity of the cereal plant grown and a seed of the cereal plant, wherein the SBI agent and the SDHI agent are defined as above.

In a preferred embodiment in combination with any of the above and below embodiments, the cereal plant is at least one selected from the group consisting of wheat and barley.

In a preferred embodiment in combination with any of the above and below embodiments, the application is foliar application.

In a further preferred embodiment in combination with any of the above and below embodiments, the method comprises applying agents for controlling cereal plant diseases to at least one selected from the group consisting of a cereal plant, soil in the vicinity of the cereal plant grown and a seed of the cereal plant at the same time or with a time lag, wherein one agent is fluoroimide or an agrochemically acceptable salt thereof and the other agent is an agent containing one or more compounds selected from the group consisting of (1) SBI agents, and (2) SDHI agents or agrochemically acceptable salts thereof as defined above.

Advantageous Effects Of Invention

According to the agent for controlling cereal plant diseases of the present invention, the combination of fluoroimide and one or more compounds selected from the group consisting of (1) SBI agents, and (2) SDHI agents can synergistically exert control effect against diseases of cereal plants at a lower dosage than conventionally used alone, thereby reducing the environmental burden by the agent and phytotoxicity to the cultivated plants. Description of Embodiments

The agent for controlling cereal plant diseases of according to the present invention (including a composition for controlling cereal plant diseases, sometimes simply referred to as "agent for controlling plant diseases of the present invention", the same applies hereinafter) is characterized by combining fluoroimide and at least one compound selected from the group consisting (1) SBI agents, and (2) SDHI agents as active ingredients.

One of the active ingredients used in the plant disease control agent according to the present invention is fluoroimide (see US Pat. No. 3,734,927) and it can be produced by a known method. Since it is also on the market, it is possible to use commercially available products. The fluoroimide component may be in the form of a salt, preferably the salt is an agrochemically acceptable salt. Examples of the acceptable salt of the agrochemical formulation include salts with inorganic acids such as hydrochloric acid, hydrobromic acid, nitric acid, sulfuric acid, phosphoric acid and the like, or salts with organic acids such as acetic acid, phthalic acid, fumaric acid, oxalic acid, tartaric acid, maleic acid, citric acid, succinic acid, methanesulfonic acid, p-toluenesulfonic acid and the like.

In addition, fluoroimide is classified as "multi-site contact activity, FRAC code M12" in Fungicides sorted by mode of action by Fungicide Resistance Action Committee (FRAC). Fluoroimide is considered to exhibit a fungicidal effect by reacting with SH groups such as the groups present in enzymes working at the time of spore germination, and inhibiting germination.

Other active ingredients that can be combined with fluoroimide being one of the active ingredients of plant disease control agent according to the present invention, include (1) SBI agent, and (2) SDHI agent. These agents are known compound described in SHIBUYA INDEX (2014) or The Pesticide Manual 15th Edition (British Crop Production Council, 2013) or published at http://www.alanwood.net/pesticides/sitemap.html.

Such an agent may be in the form of a salt, and the salt is preferably an agrochemically acceptable salt. Examples of the acceptable salt of the agricultural chemical formulation include salts with inorganic acids such as hydrochloric acid, hydrobromic acid, nitric acid, sulfuric acid, and phosphoric acid, or salts with organic acids such as acetic acid, phthalic acid, fumaric acid, oxalic acid, tartaric acid, maleic acid, citric acid, succinic acid, methanesulfonic acid, and p-toluenesulfonic acid.

Among such other active ingredients, (1) SBI agent (sterol biosynthesis inhibitor) is a group of compounds which inhibit the biosynthesis of sterols such as ergosterol and exhibit fungicidal activity, and SBI agents are classified into DMI agents, amine SBI agents and other SBI agents according to the difference in molecular species to be inhibited.

Among SBI agents, DMI agents (demethylation inhibitors) inhibit C14 demethylase in sterol biosynthesis so that they inhibit biosynthesis of sterols such as ergosterol and exihibits fungicidal activity. DMI agents are a group of compounds classified as FRAC code 3, SBI agent (Sterol Biosynthesis Inhibitor), Class I, and sometimes they can be collectively referred to as "azole fungicides" due to structural features.

DMI agents are classified into imidazoles, triazoles (including triazolinethione), pyridines, pyrimidines, piperazines in the chemical group of FRAC, and examples of DMI agents include the following:

imidazoles, such as prochloraz, imazalil, oxpoconazole, pefurazoate, or triflumizole;
triazoles, such as propiconazole, tebuconazole, difenoconazole, metconazole, epoxiconazole, azaconazole, bitertanol, bromuconazole, cyproconazole, diniconazole, Etaconazole, fenbuconazole, fluquinconazole, flusilazole, flutriafol, hexaconazole, imibenconazole, ipconazole, myclobutanil, penconazole, prothioconazole, simeconazole, tetraconazole, triadimefon, triadimenol, triticonazole, or uniconazole;
pyridines, such as pyrifenox, and pyrisoxazole;
pyrimidines, such as fenarimol, and nuarimol;
piperazines, such as triforine.

Among them, imidazoles and triazoles are preferable, among others, imidazoles which are prochloraz; and at least one triazole selected from the group consisting of propiconazole, tebuconazole, difenoconazole, metconazole, epoxiconazole and prothioconazole are further preferable.

Of the SBI agents, amine SBI agents inhibit $\Delta^{14}$ reductase and $\Delta^8 \rightarrow \Delta^7$ - isomerase in sterol biosynthesis so that they inhibit biosynthesis of sterols such as ergosterol and they exhibit fungicidal activity. Amine SBI agents are a group of compounds classified as FRAC code 5 and class II of SBI agents, and they are sometimes collectively referred to as "amine fungicide" from structural features.

The amine SBI agents are classified into morpholines, piperidines, spiroketal amines of chemical group of FRAC.

Examples of morpholines include aldimorph, dodemorph, fenpropidin, and tridemorph;
examples of piperidines include fenpropimorph, and piperalin; examples of spiro aminoketal amines include spiroxamine.

Among them, morpholines are preferable,
especially, at least one morpholine selected from the group consisting of aldimorph, dodemorph, fenpropidin, and tridemorph is more preferred.

Examples of other SBI agents include:

a group of compounds which inhibit the biosynthesis of sterols such as ergosterol by inhibiting 3-keto reductase in C4 demethylase in sterol biosynthesis and exhibit fungicidal activity, and are classified as FRAC Code 17, Class III of SBI agent class of compounds (for example, fenhexamid,a hydroxyanilide; fenpyrazamine,an aminopyrazolinones);

a group of compounds which inhibit squalene epoxidase in sterol biosynthesis so that they inhibit the biosynthesis of sterols such as ergosterol and exhibit fungicidal activity, and are classified as FRAC code 18, Class IV of SBI agent (for example, pyributicarb, a thiocarbamate; allylamines such as naftifine and terbinafine).

(2) SDHI agents (Succinate dehydrogenase inhibitor) inhibit the complex II (succinate dehydrogenase) in the Krebs cycle (TCA cycle), thereby inhibiting ATP formation and respiration of the fungus and exhibit fungicidal activity. SDHI agents are a group of compounds classified as FRAC code 7, and sometimes collectively referred to as "carboxamide fungicide" due to their structural features.

SDHI agents are classified in the FRAC chemical group as phenylbenzamides, pyrazolecarboxamides, oxathiin carboxamides, furancarboxamides, pyridinylethylbenzoamides, phenyloxoethylthiophenamides, thiazolecarboxamides, pyridinecarboxamides.

Examples of the phenylbenzamides include benodanil, flutolanil, and mepronil;

examples of the pyrazole carboxamides include benzovindiflupyr, bixafen, fluxapyroxad, furametpyr, isopyrazam, penflufen, sedaxane, and penthiopyrad;

examples of the oxathiin carboxamides include carboxin, and oxycarboxin;

examples of the furancarboxamides include fenfuram;

examples of pyridinylethylbenzoamides include fluopyram;

examples of the phenyloxoethylthiopheneamides include isofetamide;

examples of thiazole carboxamides include thifluzamide; and

examples of pyridine carboxamides include boscalid.

Of these, pyrazole carboxamides and pyridine carboxamides are preferred. In particular, at least one pyrazole carboxamide selected from the group consisting of bixafen, fluxapyroxad and isopyrazam; and

boscalid which is a pyridine carboxamide are more preferred.

(1) SBI agents (including DMI agents, amine SBI agents and other SBI agents) inhibit any one of enzymes in the sterol biosynthetic pathway. However, each of SBI agents shares common property in that it inhibits the biosynthesis of sterols such as ergosterol, which is an important constituent lipid of the cell membrane, thereby exerting fungicidal activity, which is thought to be a synergistic fungicidal action with fluoroimide.

(2) SDHI agents share common property in that they inhibit enzymes involved in mitochondrial respiration thereby exerting fungicidal activity, and are thought to exhibit synergistic fungicidal action with fluoroimide.

Thus, fluoroimide can be used in combination with one or more compounds selected from the group consisting of (1) SBI agents, and (2) SDHI agents, so as to enhance its cereal plant disease control activity, and vice versa, one or more compounds selected from the group consisting of (1) SBI agents, and (2) SDHI agents can be used in combination with fluoroimide so as to enhance its cereal plant disease control activity.

Preferred combinations in the present invention include the following:

fluoroimide and azaconazole; fluoroimide and bitertanol; fluoroimide and bromuconazole; fluoroimide and cyproconazole; fluoroimide and difenoconazole; fluoroimide and diniconazole; fluoroimide and epoxiconazole; fluoroimide and etaconazole; fluoroimide and fenarimol; fluoroimide and fenbuconazole; fluoroimide and fluquinconazole; fluoroimide and flurosilazole; fluoroimide and flutriafol; fluoroimide and hexaconazole; fluoroimide and imazalil; fluoroimide and imibenconazole; fluoroimide and ipconazole; fluoroimide and metconazole; fluoroimide and myclobutanil; fluoroimide and nuarimol; fluoroimide and oxpoconazole; fluoroimide and pefurazoate; fluoroimide and penconazole; fluoroimide and prochloraz; fluoroimide and propiconazole; fluoroimide and prothioconazole; fluoroimide and pyrifenox; fluoroimide and pyrisoxazole; fluoroimide and simeconazole; fluoroimide and tebuconazole; fluoroimide and tetraconazole; fluoroimide and triadimefon; fluoroimide and triadimenol; fluoroimide and triflumizole; fluoroimide and triforine; fluoroimide and triticonazole; fluoroimide and uniconazole;

fluoroimide and aldimorph; fluoroimide and dodemorph; fluoroimide and fenpropidin; fluoroimide and fenpropimorph; fluoroimide and spiroxamine; fluoroimide and tridemorph; fluoroimide and piperalin;

fluoroimide and azoxystrobin; fluoroimide and coumoxystrobin; fluoroimide and dimoxystrobin; fluoroimide and enestrobin; fluoroimide and enoxastrobin; fluoroimide and fenamidone; fluoroimide and fenaminostrobin; fluoroimide and flufenoxystrobin; fluoroimide and fluoxastrobin; fluoroimide and kresoxim-methyl; fluoroimide and metominostrobin; fluoroimide and oryzastrobin; fluoroimide and picoxystrobin; fluoroimide and pyribencarb; fluoroimide and pyrametostrobin; fluoroimide and pyraoxystrobin; fluoroimide and triclopyricarb; fluoroimide and trifloxystrobin; fluoroimide and benodanil; fluoroimide and benzovindiflupyr;

fluoroimide and bixafen; fluoroimide and boscalid; fluoroimide and carboxin; fluoroimide and fenfuram; fluoroimide and flutolanil; fluoroimide and fluopyram; fluoroimide and fluxapyroxad; fluoroimide and furametpyr; fluoroimide and isofetamid; fluoroimide and isopyrazam; fluoroimide and mepronil; fluoroimide and oxycarboxin; fluoroimide and penflufen; fluoroimide and sedaxane; fluoroimide and thifluzamide;

fluoroimide and cyprodinil; fluoroimide and mepanipyrim; fluoroimide and pyrimethanil; fluoroimide and fenhexamid; flluoroimide and fenpyrazamine; fluoroimide and naftifine; fluoroimide and pyributicarb; fluoroimide and terbinafine.

In another embodiment of a preferred compound to be combined with fluoroimide in the present invention, one or more compounds selected from the group consisting of (1) SBI agents and (2) SDHI agents are preferable, and one or more compounds selected from the group consisting of DMI agents and SDHI agents are more preferred.

Preferred DMI agents include imidazoles and triazoles. In particular, preferred DMI agents include one or more compounds selected from the group consisting of:

at least one imidazole selected from the group consisting of prochloraz, imazalil, oxpoconazole, pefurazoate and triflumizole; and

at least one triazole selected from the group consisting of propiconazole, tebuconazole, difenoconazole, metconazole, epoxiconazole, azaconazole, bitertanol, bromuconazole, cyproconazole, diniconazole, etaconazole, fenbuconazole, fluquinconazole, flusilazole, flutriafol, hexaconazole, imibenconazole, ipconazole, myclobutanil, penconazole, prothioconazole, simeconazole, tetraconazole, triadimefon, triadimenol, triticonazole and uniconazole.

More preferred DMI agents include one or more compounds selected from the group consisting of:

one or more compounds selected from the group consisting of: imidazoles which are prochloraz; and

at least one triazole selected from the group consisting of propiconazole, tebuconazole, difenoconazole, metconazole, epoxiconazole and prothioconazole.

Preferred SDHI agents include pyrazole carboxamides and pyridine carboxamides. In particular, more preferred SDHI agents include one or more compounds selected from the group consisting of:

at least one pyrazole carboxamide selected from the group consisting of benzovindiflupyr, bixafen, fluxapyroxad, furametpyr, isopyrazam, penflufen, sedaxane and penthiopyrad; and

boscalid, which is a pyridine carboxamide.

Still more preferred SDHI agents include one or more compounds selected from the group consisting of:

at least one pyrazole carboxamide selected from the group consisting of bixafen, fluxapyroxad and isopyrazam; and

boscalid, which is a pyridine carboxamide.

Specific combinations that are more preferable in the present invention include fluoroimide and cyproconazole; fluoroimide and propiconazole; fluoroimide and metconazole; fluoroimide and difenoconazole; fluoroimide and epoxiconazole; fluoroimide and hexaconazole; fluoroimide and ipconazole; fluoroimide and prochloraz; fluoroimide and propiconazole; fluoroimide and prothioconazole; fluoroimide and tebuconazole; fluoroimide and tetraconazole; fluoroimide and azoxystrobin; fluoroimide and kresoxim-methyl; fluoroimide and picoxystrobin; fluoroimide and trifloxystrobin; fluoroimide and bixafen; fluoroimide and boscalid; fluoroimide and fluopyram; fluoroimide and fluxapyroxad; fluoroimide and isofetamid; fluoroimide and isopyrazam; fluoroimide and sedaxane.

Particularly preferred are fluoroimide and propiconazole; fluoroimide and metconazole; fluoroimide and difenoconazole; fluoroimide and epoxiconazole; fluoroimide and prochloraz; fluoroimide and prothioconazole; fluoroimide and tebuconazole; fluoroimide and bixafen; fluoroimide and boscalid; fluoroimide and fluxapyroxad; fluoroimide and isopyrazam.

Examples of useful plants which the present invention can protect include, but are not particularly limited to, cereals (e.g., rice, barley, wheat, rye, oats, corn, etc.), and also include, for example, legumes (e.g., soybeans, azuki beans, broad beans, green peas, kidney beans, peanuts, etc.), fruit trees and fruits (e.g., apples, citrus fruits, pears, grapes, peaches, plums, cherries, walnuts, chestnuts, almonds, bananas, etc.), leaf and fruit vegetables (e.g., cabbages, tomatoes, spinach, broccoli, lettuce, onions, welsh onions, green peppers, eggplants, strawberries, pepper crops, okra, etc.), root vegetables (e.g., carrots, potatoes, sweet potatoes, taros, Japanese radishes, turnips, lotus roots, burdock roots, garlic, etc.), crops for processing (e.g., cotton, hemp, beet, hops, sugarcane, sugar beet, olives, rubber, coffee, tobacco, tea, etc.), gourds (e.g., Japanese pumpkins, cucumbers, watermelons, oriental sweet melons, melons, etc.), pasture grass (e.g., orchardgrass, sorghum, timothy, clover, alfalfa, etc.), lawn grass (e.g., Korean lawn grass, bent grass, etc.), spice and aromatic crops and ornamental crops (e.g., lavender, rosemary, thyme, parsley, pepper, ginger, etc.), ornamental flowering plants (e.g., chrysanthemum, rose, carnation, orchid, etc.), garden trees (e.g., ginkgo trees, cherry trees, Japanese aucuba, etc.) and forest trees (e.g. Abies sachalinensis, Picea jezoensis,pine, yellow cedar, Japanese cedar, hinoki cypress, eucalyptus, etc.). Preferred are cereals, and further preferred are barley and wheat.

The above-mentioned "plants" also include plants provided with herbicide tolerance by a classical breeding technique or a gene recombination technique. Examples of such herbicide tolerance include tolerance to HPPD inhibitors, such as isoxaflutole; ALS inhibitors, such as imazethapyr and thifensulfuron-methyl; EPSP synthase inhibitors, such as glyphosate; glutamine synthetase inhibitors, such as glufosinate; acetyl-CoA carboxylase inhibitors, such as sethoxydim; or other herbicides, such as bromoxynil, dicamba and 2,4-D.

Examples of the "plants" provided with herbicide tolerance by a classical breeding technique include varieties of rapeseed, wheat, sunflower and rice tolerant to the imidazolinone family of ALS-inhibiting herbicides such as imazethapyr, and such plants are sold under the trade name of "Clearfield" (registered trademark). Also included is a variety of soybean provided with tolerance to the sulfonyl urea family of ALS-inhibiting herbicides such as thifensulfuron-methyl by a classical breeding technique, and this is sold under the trade name of "STS soybean". Also included are plants provided with tolerance to acetyl-CoA carboxylase inhibitors such as trione oxime herbicides and aryloxy phenoxy propionic acid herbicides by a classical breeding technique, for example, SR corn.

Plants provided with tolerance to acetyl-CoA carboxylase inhibitors are described in Proc. Natl. Acad. Sci. USA, 87, 7175-7179 (1990), and the like. Further, acetyl-CoA carboxylase mutants resistant to acetyl-CoA carboxylase inhibitors are reported in Weed Science, 53, 728-746 (2005), and the like, and by introducing the gene of such an acetyl-CoA carboxylase mutant into plants by a gene recombination technique, or introducing a resistance-conferring mutation into acetyl-CoA carboxylase of plants, plants tolerant to acetyl-CoA carboxylase inhibitors can be engineered. Alternatively, by introducing a nucleic acid causing base substitution mutation into plant cells (a typical example of this technique is chimeraplasty technique (Gura T. 1999. Repairing the Genome's Spelling Mistakes. Science 285: 316-318 .)) to allow site-specific substitution mutation in the amino acids encoded by an acetyl-CoA carboxylase gene, an ALS gene or the like of plants, plants tolerant to acetyl-CoA carboxylase inhibitors, ALS inhibitors or the like can be engineered. The plant disease control agent of the present invention can be applied to these plants as well.

Further, exemplary toxins expressed in genetically modified plants include insecticidal proteins of *Bacillus cereusor, Bacillus popilliae; Bacillus thuringiensis* δ-endotoxins, such as Cry1Ab, Cry1Ac, Cry1F, Cry1Fa2, Cry2Ab, Cry3A, Cry3Bb1 and Cry9C, and other insecticidal proteins, such as VIP1, VIP2, VIP3 and VIP3A; nematode insecticidal proteins; toxins produced by animals, such as scorpion toxins, spider toxins, bee toxins and insect-specific neurotoxins; toxins of filamentous fungi; plant lectins; agglutinin; protease inhibitors, such as trypsin inhibitors, serine protease inhibitors, patatin, cystatin and papain inhibitors; ribosome inactivating proteins (RIP), such as ricin, maize RIP, abrin, luffin, saporin and bryodin; steroid metabolizing enzymes, such as 3-hydroxy steroid oxidase, ecdysteroid-UDP-glucosyltransferase and cholesterol oxidase; ecdysone inhibitors; HMG-CoA reductase; ion channel inhibitors, such as sodium channel inhibitors and calcium channel inhibitors; juvenile hormone esterase; diuretic hormone receptors; stilbene synthase; bibenzyl synthase; chitinase; and glucanase.

Also included are hybrid toxins, partially deficient toxins and modified toxins derived from the following: δ-endotoxin proteins such as Cry1Ab, Cry1Ac, Cry1F, Cry1Fa2, Cry2Ab, Cry3A, Cry3Bb1, Cry9C, Cry34Ab and Cry35Ab, and other insecticidal proteins such as VIP1, VIP2, VIP3 and VIP3A. The hybrid toxin can be produced by combining some domains of these proteins differently from the original combination in nature with the use of a recombination technique. As the partially deficient toxin, a CrylAb toxin in which a part of the amino acid sequence is deleted is known. In the modified toxin, one or more amino acids of a naturally occurring toxin are substituted.

Examples of the foregoing toxins and genetically modified plants capable of synthesizing these toxins are described in EP-A-0 374 753 , WO 93/07278 , WO 95/34656 , EP-A-0 427 529 , EP-A-451 878 , WO 03/052073 , etc.

The pathogens of the target diseases to be controlled in the present invention are pathogens of diseases which affect cereals, and examples of the target pathogens include pathogens of physiological leaf spots; *Ascochyta tritici* (pathogen of leaf spot); *Blumeria graminis* (pathogen of powdery mildew of cereals); *Cladosporium herbarum* (pathogen of black mold); *Cochliobolus sativus* (pathogen of poaceous spot blotch);*Epicoccum* spp. (pathogen of wheat glume spot), *Erysiphe graminis* (pathogen of powdery mildew of wheat and barley); *Fusarium* spp. such as *Fusarium graminearum, Fusarium culmorum* (pathogen of root rot); *Gaeumannomyces graminis* (take-all root rot), *Leptosphaeria nodorum* (pathogen of glume blotch), *Microdochium nivale* (pathogen of pink snow mold); physiological leaf spots; *Pseudocercosporella* spp. such as Pseudocercospora herpotrichoides, *Pseudocercosporella herpotrichoides* (pathogen of eyespot); *Puccinia* spp. such as *Puccinia striiformis* (pathogen of rust), *Puccinia triticina* (pathogen of leaf rust), *Puccinia hordei* (dwarf leaf rust of barley) *Puccinia recondita* (pathogen of leaf rust of wheat); *Pyrenophora* spp. such as *Pyrenophora graminea, Pyrenophora teres* (pathogen of net blotch), *Pyrenophora tritici repentis; Ramularia collo-cygni* (pathogen of physiological leaf spots); *Rhizoctonia* spp. such as *Rhizoctonia solani* (pathogen of root rot/stem rot), *Rhizoctonia cerealis* (pathogen of yellow patch); *Rhynchosporium secalis; Septoria* app. such as *Septoria nodorum* (pathogen of glume blotch of wheat), *Septoria tritici* (pathogen of leaf blotch of wheat); *Stagonospora nodorum; Tilletia caries; Typhula*

*incarnata* (pathogen of snow mold); *Uromyces appendiculatus; Ustilago* spp. such as *Ustilago avenae* and *Ustilago nuda*.

Among them, preferred targets to be controlled are *Cladosporium herbarum* (pathogen of black mold); *Cochliobolus sativus* (pathogen of poaceous spot blotch), *Epicoccum* spp.(pathogen of wheat glume spot); *Fusarium graminearum* (pathogen of Fusarium ear blight of wheat and barley); *Fusarium culmorum* (pathogen of root rot); *Gaeumannomyces graminis* (a causal agent of take-all root rot); *Leptosphaeria nodorum* (pathogen of glume blotch); *Microdochium nivale* (pathogen of pink snow mold); *Pseudocercospora* spp. such as *Pseudocercospora herpotrichoides, Pseudocercosporella herpotrichoides* (pathogen of eyespot); *Pyrenophora* spp. such as *Pyrenophora graminea* (pathogen of stripe), *Pyrenophora teres* (pathogen of net blotch), *Pyrenophora tritici repentis* (a causal agent of yellow leaf spot of wheat); *Ramularia collo-cygni* (pathogen of physiological leaf spots); *Rhynchosporium secalis* (pathogen of scald); *Septoria* spp. such as *Septoria nodorum* (pathogen of glume blotch of wheat), *Septoria tritici* (pathogen of leaf blotch of wheat); *Stagonospora nodorum* (loculoascomycetes); *Tilletia caries* (pathogen of stinking smut); *Typhula incarnata* (pathogen of snow mold); *Ustilago* spp. such as *Ustilago avenae* (pathogen of loose smut of oat) and *Ustilago nuda* (loose smut of wheat).

More preferred targets to be controlled are *Fusarium graminearum* (pathogen of Fusarium ear blight of wheat and barley); *Leptosphaeria nodorum* (pathogen of glume blotch); *Pseudocercosporella* spp. such as *Pseudocercospora herpotrichoides, Pseudocercosporella herpotrichoides* (pathogen of eyespot); *Septoria* spp. such as *Septoria nodorum* (pathogen of glume blotch of wheat) and *Septoria tritici* (pathogen of leaf blotch of wheat).

Particularly preferred targets to be controlled are *Septoria* spp. and *Septoria tritici* (pathogen of leaf blotch of wheat) is especially preferred.

The cereal plant diseases control agent of the present invention comprises the combination of fluoroimide as an active ingredient and at least one compound selected from the group of (1) SBI agents, (2) QoI agents, (3) SDHI agents and (4) anilinopyrimidine fungicides as other active ingredient (hereinafter sometimes referred to as "other active ingredient"). The agent comprising the combination can be prepared as separated two or more formulations each of which containing one active ingredient, or can be prepared as a single formulation containing both of active ingredients in formulating the cereal plant diseases control agent of the present invention.

That is, the active ingredient of the present invention, i.e., fluoroimide or a salt thereof and other ingredients, and an appropriate inactive carrier, and if needed an adjuvant, are blended in an appropriate ratio, and through the step of dissolution, separation, suspension, mixing, impregnation, adsorption and/or adhesion, are formulated into an appropriate form for application, in single formulation such as a suspension concentrate, an emulsifiable concentrate, a soluble concentrate, a wettable powder, a water-dispersible granule, a granule, a dust, a tablet and a pack, or in two or more separated formulation such as the combination of the two or more formulations recited above.

The formulation used in the control method of the present invention can optionally contain an additive usually used for agrochemical formulations in addition to the active ingredient. Examples of the additive include carriers such as solid or liquid carriers, surfactants, dispersants, wetting agents, binders, tackifiers, thickeners, colorants, spreaders, sticking/spreading agents, antifreezing agents, anti-caking agents, disintegrants and stabilizing agents. If needed, preservatives, plant fragments, etc. may also be used as the additive. One of these additives may be used alone, or two or more of them may be used in combination.

Examples of the solid carriers include natural minerals, such as quartz, clay, kaolinite, pyrophyllite, sericite, talc, bentonite, acid clay, attapulgite, zeolite and diatomite; inorganic salts, such as calcium carbonate, ammonium sulfate, sodium sulfate and potassium chloride; organic solid carriers, such as synthetic silicic acid, synthetic silicates, starch, cellulose and plant powders (for example, sawdust, coconut shell, corn cob, tobacco stalk, etc.); plastics carriers, such as polyethylene, polypropylene and polyvinylidene chloride; urea; hollow inorganic materials; hollow plastic materials; and fumed silica (white carbon). One of these solid carriers may be used alone, or two or more of them may be used in combination.

Examples of the liquid carriers include alcohols including monohydric alcohols, such as methanol, ethanol, propanol, isopropanol and butanol, and polyhydric alcohols, such as ethylene glycol, diethylene glycol, propylene glycol, hexylene glycol, polyethylene glycol, polypropylene glycol and glycerin; polyol compounds, such as propylene glycol ether; ketones, such as acetone, methyl ethyl ketone, methyl isobutyl ketone, diisobutyl ketone and cyclohexanone; ethers, such as ethyl ether, dioxane, ethylene glycol monoethyl ether, dipropyl ether and tetrahydrofuran; aliphatic hydrocarbons, such as normal paraffin, naphthene, isoparaffin, kerosene and mineral oil; aromatic hydrocarbons, such as benzene, toluene, xylene, solvent naphtha and alkyl naphthalene; halogenated hydrocarbons, such as dichloromethane, chloroform and carbon tetrachloride; esters, such as ethyl acetate, diisopropyl phthalate, dibutyl phthalate, dioctyl phthalate and dimethyl adipate; lactones, such as γ-butyrolactone; amides, such as dimethylformamide, diethylformamide, dimethylacetamide and N-alkyl pyrrolidinone; nitriles, such as acetonitrile; sulfur compounds, such as dimethyl sulfoxide; vegetable oils, such as soybean oil, rapeseed oil, cotton seed oil and castor oil; and water. One of these liquid carriers may be used alone, or two or more of them may be used in combination.

Exemplary surfactants used as the dispersant or the wetting/spreading agent include nonionic surfactants, such as sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkyl aryl ether, polyoxyethylene alkyl phenyl ether, polyoxyethylene dialkyl phenyl ether, polyoxyethylene alkyl phenyl ether-formaldehyde condensates, polyoxyethylene-polyoxypropylene block copolymers, polystyrene-polyoxyethylene block polymers, alkyl polyoxyethylene-polypropylene block copolymer ether, polyoxyethylene alkylamine, polyoxyethylene fatty acid amide, polyoxyethylene fatty acid bis(phenyl ether), polyalkylene benzyl phenyl ether, polyoxyalkylene styryl phenyl ether, acetylene diol, polyoxyalkylene-added acetylene diol, polyoxyethylene ether-type silicone, ester-type silicone, fluorosurfactants, polyoxyethylene castor oil and polyoxyethylene hydrogenated castor oil; anionic surfactants, such as alkyl sulfates, polyoxyethylene alkyl ether sulfates, polyoxyethylene alkyl phenyl ether sulfates, polyoxyethylene styryl phenyl ether sulfates, alkylbenzene sulfonates, alkylaryl sulfonates, lignosulfonates, alkyl sulfosuccinates, naphthalene sulfonates, alkylnaphthalene sulfonates, salts of naphthalenesulfonic acid-formaldehyde condensates, salts of alkylnaphthalenesulfonic acid-formaldehyde condensates, fatty acid salts, polycarboxylic acid salts, polyacrylates, N-methyl-fatty acid sarcosinates, resinates, polyoxyethylene alkyl ether phosphates and polyoxyethylene alkyl phenyl ether phosphates; cationic surfactants including alkyl amine salts, such as lauryl amine hydrochloride, stearyl amine hydrochloride, oleyl amine hydrochloride, stearyl amine acetate, stearyl aminopropyl amine acetate, alkyl trimethyl ammonium chloride and alkyl dimethyl benzalkonium chloride; and amphoteric surfactants, such as amino acid-type or betaine-type amphoteric surfactants. One of these surfactants may be used alone, or two or more of them may be used in combination.

Examples of the binders or the tackifiers include carboxymethyl cellulose or salts thereof, dextrin, soluble starch, xanthan gum, guar gum, sucrose, polyvinyl pyrrolidone, gum arabic, polyvinyl alcohol, polyvinyl acetate, sodium polyacrylate, polyethylene glycols with an average molecular weight of 6,000 to 20,000, polyethylene oxides with an average molecular weight of 100,000 to 5,000,000, phospholipids (for example, cephalin, lecithin, etc.), cellulose powder, dextrin, modified starch, polyaminocarboxylic acid chelating compounds, cross-linked polyvinyl pyrrolidone, maleic acid-styrene copolymers, (meth)acrylic acid copolymers, half esters of polyhydric alcohol polymer and dicarboxylic anhydride, water soluble polystyrene sulfonates, paraffin, terpene, polyamide resins, polyacrylates, polyoxyethylene, waxes, polyvinyl alkyl ether, alkylphenolformaldehyde condensates and synthetic resin emulsions. Each of these may be used alone, or two or more of them may be used in combination.

Examples of the thickeners include water soluble polymers, such as xanthan gum, guar gum, diutan gum, carboxymethyl cellulose, polyvinyl pyrrolidone, carboxyvinyl polymers, acrylic polymers, starch derivatives and polysaccharides; and inorganic fine powders, such as high grade bentonite and fumed silica (white carbon). Each of these may be used alone, or two or more of them may be used in combination.

Examples of the colorants include inorganic pigments, such as iron oxide, titanium oxide and Prussian blue; and organic dyes, such as alizarin dyes, azo dyes and metal phthalocyanine dyes. Each of these may be used alone, or two or more of them may be used in combination.

Examples of the antifreezing agents include polyhydric alcohols, such as ethylene glycol, diethylene glycol, propylene glycol and glycerin. Each of these may be used alone, or two or more of them may be used in combination.

Examples of the adjuvants serving to prevent caking or facilitate disintegration include polysaccharides (starch, alginic acid, mannose, galactose, etc.), polyvinyl pyrrolidone, fumed silica (white carbon), ester gum, petroleum resin, sodium tripolyphosphate, sodium hexametaphosphate, metal stearates, cellulose powder, dextrin, methacrylate copolymers, polyvinyl pyrrolidone, polyaminocarboxylic acid chelating compounds, sulfonated styrene-isobutylene-maleic anhydride copolymers and starch-polyacrylonitrile graft copolymers. Each of these may be used alone, or two or more of them may be used in combination.

Examples of the stabilizing agents include desiccants, such as zeolite, quicklime and magnesium oxide; antioxidants, such as phenolic compounds, amine compounds, sulfur compounds and phosphoric acid compounds; and ultraviolet absorbers, such as salicylic acid compounds and benzophenone compounds. Each of these may be used alone, or two or more of them may be used in combination.

Examples of the preservatives include potassium sorbate and 1,2-benzothiazolin-3-one.

Further, other adjuvants including functional spreading agents, activity enhancers such as metabolic inhibitors (piperonyl butoxide etc.), antifreezing agents (propylene glycol etc.), antioxidants (BHT etc.) and ultraviolet absorbers can also be used if needed. Each of these may be used alone, or two or more of them may be used in combination.

The ratio of the amount of the other active ingredient that can be used in combination with fluoroimide to the amount of the fluoroimide used varies depending on the growth situation of the crop, the occurrence tendency of the disease, the weather, the environmental condition, the dosage form, the application method, the application place, the application time and the like. The amount of other active ingredient or agricultural chemical acceptable salt can be selected in the range of preferably 0.0001 to 100 parts by weight (parts by mass), more preferably in the range of 0.001 to 25 parts by weight (parts by mass), further preferably in the range of 0.001 to 10 parts by weight (parts by mass), even more preferably in the range of 0.005 to 10 parts by weight (parts by mass), particularly preferably in the range of 0.01 to 5 parts by weight (parts by mass), per 1 part by weight (parts by mass) of fluoroimide or agrochemical formulation thereof.

The amount of active ingredient compound (total amount of fluoroimide and other active ingredients) used can be adjusted as needed. The amount of the active ingredient compound may be suitably selected from the range of 0.1 to 90 parts by weight (parts by mass) in 100 parts by weight (parts by mass) of the preparation. For example, when it is used as a powder or granule, it is preferably about 0.1 to 30 parts by weight (parts by mass), and in the case of an emulsion, a wettable powder, a flowable formulation or a water dispersible granule, it is preferably 0.1 to 60 parts by weight (parts by mass) is appropriate. When the plant disease control agent of the present invention is a combination of two preparations obtained by separately preparing fluoroimide and other active ingredient, the above ratio is the ratio of the total amount of fluoroimide and other active ingredient to the total amount of the two preparations.

The application rate of the formulation may vary with various factors, for example, the purpose, the target disease, the growing conditions of crops, the tendency of disease infestation, the weather, the environmental conditions, the dosage form, the application method, the application site, the application timing, etc., but basically, the application rate of the active ingredient compound (total amount of fluoroimide and other active ingredients) is appropriately selected from the range of 1 g to 10 kg, and preferably 100 g to 5000 g per hectare depending on the purpose.

In order to control target diseases by the plant disease control agent of the present invention, the formulation, with or without appropriate dilution or suspension in water etc., is applied to at least one of plants potentially infested with the target diseases, the peripheral soil in which plants are cultivated and the seeds of plants in an amount effective for the control of the diseases. For example, in order to control diseases that may affect crop plants such as fruit trees and vegetables as well as cereals, foliar application and seed treatment such as dipping, dust coating and calcium peroxide coating can be performed. Further, treatment of soil or the like may also be performed to allow plants to absorb agrochemicals through their roots. Examples of such treatment include whole soil incorporation, planting row treatment, bed soil incorporation, plug seedling treatment, planting hole treatment, plant foot treatment, top-dressing, treatment of nursery boxes for paddy rice, and submerged application. In addition, application to culture media in hydroponics, smoking treatment, trunk injection and the like can also be performed. Preferred is foliar application.

Exemplary methods of seed treatment include dipping of seeds in a diluted or undiluted fluid of a liquid or solid formulation for the permeation of agrochemicals into the seeds; mixing or dust coating of seeds with a solid or liquid formulation for the adherence of the formulation onto the surfaces of the seeds; coating of seeds with a mixture of a solid or liquid formulation and an adhesive carrier such as resins and polymers; and application of a solid or liquid formulation to the vicinity of seeds at the same time as seeding.

The term "seed" in the above-mentioned seed treatment refers to a plant body which is in the early stages of cultivation and used for plant propagation. The examples include, in addition to a so-called seed, a plant body for vegetative propagation, such as a bulb, a tuber, a seed potato, a bulbil, a propagule, a discoid stem and a stem used for cuttage.

The term "soil" or "cultivation medium" in the method for using the control agent of the present invention refers to a support medium for crop cultivation, in particular a support medium which allows crop plants to spread their roots therein, and the materials are not particularly limited as long as they allow plants to grow. Examples of the support medium include what is called soils, seedling mats and water, and specific examples of the materials include sand, pumice, vermiculite, diatomite, agar, gelatinous substances, high-molecular-weight substances, rock wool, glass wool, wood chip and bark.

Exemplary methods of application to crop foliage etc. include application of a liquid formulation, such as an emulsifiable concentrate and a flowable, or a solid formulation, such as a wettable powder and a water-dispersible granule, after appropriate dilution in water; and dust application.

Exemplary methods of soil application include application of a water-diluted or undiluted liquid formulation to the foot of plants, nursery beds for seedlings, or the like; application of a granule to the foot of plants, nursery beds for seedlings, or the like; application of a dust, a wettable powder, a water-dispersible granule, a granule or the like onto soil and subsequent incorporation of the formulation into the whole soil before seeding or transplanting; and application of a dust, a wettable powder, a water-dispersible granule, a granule or the like to planting holes, planting rows or the like before seeding or planting.

The control method of the present invention includes not only applying a single preparation containing both fluoroimide and other active ingredients or simultaneously applying two or more preparations comprising a preparation containing fluoroimide and a preparation containing other active ingredients, but also applying a preparation containing one of the two active ingredients foliarly or to the soil, and after a certain period of time, applying a preparation containing the other active ingredient foliarly or to the soil. The certain period of time is a period after application of the preparation containing one of the two active ingredients and can be appropriately selected within a range from one day to one month.

To nursery boxes for paddy rice, for example, a dust, a water-dispersible granule, a granule or the like can be applied, although the suitable formulation may vary depending on the application timing, in other words, depending on the cultivation stage such as seeding time, greening period and planting time. A formulation such as a dust, a water-dispersible granule, a granule or the like may be mixed with nursery soil. For example, such a formulation is incorporated into bed soil, covering soil or the whole soil. Simply, nursery soil and such a formulation may be alternately layered. The time of application concerning sowing may be before sowing, at the same time, or after sowing, and may be applied after covering soil.

In the application to paddy fields, a solid formulation, such as a jumbo, a pack, a granule and a water-dispersible granule, or a liquid formulation, such as a flowable and an emulsifiable concentrate, is applied usually to flooded paddy fields. In a rice planting period, a suitable formulation, as it is or after mixed with a fertilizer or the like, may be applied onto soil or injected into soil. In addition, a solution of an emulsifiable concentrate, a flowable or the like may be applied to the source of water supply for paddy fields, such as a water inlet and an irrigation device. In this case, treatment can be accomplished with the supply of water and thus achieved in a labor-saving manner.

In the case of field crops, their seeds, cultivation media in the vicinity of their plants, or the like may be treated in the period of seeding to seedling culture. In the case of plants of which the seeds are directly sown in the field, in addition to direct seed treatment, plant foot treatment during cultivation is preferable. Specifically, the treatment can be performed by, for example, applying a granule onto soil, or drenching soil with a formulation in a water-diluted or undiluted liquid form. Another available treatment is incorporation of a granule into cultivation media before seeding.

In the case of culture plants to be transplanted, preferable examples of the treatment in the period of seeding to seedling culture include, in addition to direct seed treatment, drench treatment of nursery beds for seedlings with a formulation in a liquid form; and granule application to nursery beds for seedlings. Also included are treatment of planting holes with a granule; and incorporation of a granule into cultivation media in the vicinity of planting points at the time of fix planting.

Exemplary methods of soil application include application of a water-diluted or undiluted liquid or solid formulation to the vicinity of planting points, nursery beds for seedlings, or the like; application of a granule to the vicinity of planting points or nursery beds; application of a dust, a wettable powder, a water-dispersible granule, a granule or the like onto soil and subsequent incorporation of the formulation into the whole soil before seeding or transplanting; and application of a dust, a wettable powder, a water-dispersible granule, a granule or the like to planting holes, planting rows or the like before seeding or planting.

Furthermore, for the expansion of the range of target diseases and the appropriate time for disease control, or for dose reduction, the formulation can be used in combination with other insecticides, acaricides, nematicides, fungicides, and/or biopesticides. Further, the formulation can be used in combination with herbicides, plant growth regulators, fertilizers and/or the like depending on the situation. Likewise, the embodiments are also not limited that include the combinations of the plant disease controlling agent of the present invention (including a single preparation containing fluoroimide and other active ingredients, or two or more preparations obtained by separately formulating fluoroimide or other active ingredients) with another insecticides, acaricides, nematicides, fungicides, biopesticides, erbicides, plant growth regulators, fertilizers, and/or the like. The combinations may be in a form of single formulation, or may be a form of combining a plurality of preparations obtained by separately prepared formulation.

Examples of such additional insecticides, acaricides and nematicides used for the above-mentioned purposes include 3,5-xylyl methylcarbamate (XMC), crystalline protein toxins produced by *Bacillus thuringiensis* such as *Bacillus thuringiensis aizawai, Bacillus thuringiensis israelensis, Bacillus thuringiensis japonensis, Bacillus thuringiensis kurstaki* and *Bacillus thuringiensis tenebrionis,* BPMC, Bt toxin-derived insecticidal compounds, chlorfenson (CPCBS), dichlorodiisopropyl ether (DCIP), 1,3-dichloropropene (D-D), DDT, NAC, O-4-dimethylsulfamoylphenyl O,O-diethyl phosphorothioate (DSP), O-ethyl O-4-nitrophenyl phenylphosphonothioate (EPN), tripropylisocyanurate (TPIC), acrinathrin, azadirachtin, azinphos-methyl, acequinocyl, acetamiprid, acetoprole, acephate, abamectin, avermectin-B, amidoflumet, amitraz, alanycarb, aldicarb, aldoxycarb, aldrin, alpha-endosulfan, alpha-cypermethrin, albendazole, allethrin, isazofos, isamidofos, isoamidofos, isoxathion, isofenphos, isoprocarb (MIPC), ivermectin, imicyafos, imidacloprid, imiprothrin, indoxacarb, esfenvalerate, ethiofencarb, ethion, ethiprole, etoxazole, ethofenprox, ethoprophos, etrimfos, emamectin, emamectin-benzoate, endosulfan, empenthrin, oxamyl, oxydemeton-methyl, oxydeprofos (ESP), oxibendazole, oxfendazole, potassium oleate, sodium oleate, cadusafos, cartap, carbaryl, carbosulfan, carbofuran, gamma-cyhalothrin, xylylcarb, quinalphos, kinoprene, chinomethionat,

cloethocarb, clothianidin, clofentezine, chromafenozide, chlorantraniliprole, chlorethoxyfos, chlordimeform, chlordane, chlorpyrifos, chlorpyrifos-methyl, chlorphenapyr, chlorfenson, chlorfenvinphos, chlorfluazuron, chlorobenzilate, chlorobenzoate, kelthane (dicofol), salithion, cyanophos (CYAP), diafenthiuron, diamidafos, cyantraniliprole, theta-cypermethrin, dienochlor, cyenopyrafen, dioxabenzofos, diofenolan, sigma-cypermethrin, dichlofenthion (ECP), cycloprothrin, dichlorvos (DDVP), disulfoton, dinotefuran, cyhalothrin, cyphenothrin, cyfluthrin, diflubenzuron, cyflumetofen, diflovidazin, cyhexatin, cypermethrin, dimethylvinphos, dimethoate, dimefluthrin, silafluofen, cyromazine, spinetoram, spinosad, spirodiclofen, spirotetramat, spiromesifen, sulfluramid, sulprofos, sulfoxaflor, zetacypermethrin, diazinon, tau-fluvalinate, dazomet, thiacloprid, thiamethoxam, thiodicarb, thiocyclam, thiosultap, thiosultap-sodium, thionazin, thiometon, deet, dieldrin, tetrachlorvinphos, tetradifon, tetramethylfluthrin, tetramethrin, tebupirimfos, tebufenozide, tebufenpyrad, tefluthrin, teflubenzuron, demeton-S-methyl, temephos, deltamethrin, terbufos, tralopyril, tralomethrin, transfluthrin, triazamate, triazuron, trichlamide, trichlorphon (DEP), triflumuron, tolfenpyrad,

naled (BRP), nithiazine, nitenpyram, novaluron, noviflumuron, hydroprene, vaniliprole, vamidothion, parathion, parathion-methyl, halfenprox, halofenozide, bistrifluron, bisultap, hydramethylnon, hydroxy propyl starch, binapacryl, bifenazate, bifenthrin, pymetrozine, pyraclofos, pyrafluprole, pyridafenthion, pyridaben, pyridalyl, pyrifluquinazon, pyriprole, pyriproxyfen, pirimicarb, pyrimidifen, pirimiphos-methyl, pyrethrins, fipronil, fenazaquin, fenamiphos, bromopropylate, fenitrothion (MEP), fenoxycarb, fenothiocarb, phenothrin, fenobucarb, fensulfothion, fenthion (MPP), phenthoate (PAP), fenvalerate, fenpyroximate, fenpropathrin, fenbendazole, fosthiazate, formetanate, butathiofos, buprofezin, furathiocarb, prallethrin, fluacrypyrim, fluazinam, fluazuron, fluensulfone, flucycloxuron, flucythrinate, fluvalinate, flupyrazofos, flufenerim, flufenoxuron, flufenzine, flufenprox, fluproxyfen, flubrocythrinate, flubendiamide, flumethrin, flurimfen, prothiofos, protrifenbute, flonicamid, propaphos, propargite (BPPS), profenofos, profluthrin, propoxur (PHC), bromopropylate, beta-cyfluthrin, hexaflumuron, hexythiazox, heptenophos, permethrin, benclothiaz, bendiocarb, bensultap, benzoximate, benfuracarb, phoxim, phosalone, fosthiazate, fosthietan, phosphamidon, phosphocarb, phosmet (PMP), polynactins, formetanate, formothion, phorate,

machine oil, malathion, milbemycin, milbemycin-A, milbemectin, mecarbam, mesulfenfos, methomyl, metaldehyde, metaflumizone, methamidophos, metam-ammonium, metam-sodium, methiocarb, methidathion (DMTP), methylisothiocyanate, methylneodecanamide, methylparathion, metoxadiazone, methoxychlor, methoxyfenozide, metofluthrin, methoprene, metolcarb, meperfluthrin, mevinphos, monocrotophos, monosultap, lambda-cyhalothrin, ryanodine, lufenuron, resmethrin, lepimectin, rotenone, levamisole hydrochloride, fenbutatin oxide, morantel tartarate, methyl bromide, tricyclohexyltin hydroxide (cyhexatin), calcium cyanamide, calcium polysulfide, sulfur and nicotine-sulfate.

Examples of the agricultural and horticultural fungicides used for the same purposes as above include aureofungin, azithiram, acypetacs, acibenzolar, acibenzolar-S-methyl, anilazine, amisulbrom, ampropylfos, ametoctradin, allyl alcohol, amobam, isotianil, isovaledione, isoprothiolane, iprodione, iprovalicarb, iprobenfos, iminoctadine, iminoctadine-albesilate, iminoctadine-triacetate, echlomezole, edifenphos, ethaboxam, ethirimol, etem, ethoxyquin, etridiazole, enestroburin, oxadixyl, copper-8-quinolinolate, oxytetracycline, copper-oxinate, oxolinic acid, octhilinone, ofurace, soil fungicides such as metam-sodium, kasugamycin, carbamorph, carpropamid, carbendazim, carvone, quinazamid, quinacetol, quinoxyfen, quinomethionate, captafol, captan, kiralaxyl, quintozene, guazatine, cufraneb, cuprobam, glyodin, griseofulvin, climbazole, cresol, chlozolinate, clotrimazole, chlobenthiazone, chloraniformethan, chloranil, chlorquinox, chloropicrin, chlorfenazole, chlorodinitronaphthalene, chlorothalonil, chloroneb, zarilamid, salicylanilide, cyazofamid, diethyl pyrocarbonate, diethofencarb, cyclafuramid, diclocymet, dichlozoline, diclobutrazol, dichlofluanid, cycloheximide, diclomezine, dicloran, dichlorophen, dichlone, disulfiram, ditalimfos, dithianon, zineb, dinocap, dinocton, dinosulfon, dinoterbon, dinobuton, dinopenton, dipyrithione, diphenylamine, cyflufenamid, diflumetorim, phenylamide compounds such as cyprofuram, cypendazole, dimethirimol, dimethomorph, cymoxanil, methyl bromide, ziram, silthiofam, streptomycin, sultropen, zoxamide, dazomet, thiadiazin, tiadinil, thiadifluor, thiabendazole, tioxymid, thiochlorfenphim, thiophanate, thiophanate-methyl, thicyofen, thioquinox, thiram, decafentin, tecnazene, tecloftalam, tecoram, debacarb, dehydroacetic acid, tebufloquin, dodicin, dodine, dodecyl benzensulfonate bis-ethylene diamine copper(II) (DBEDC), drazoxolon, triazbutil, triazoxide, triamiphos, triarimol, trichlamide, tricyclazole, tributyltin oxide, tolylfluanid, tolclofos-methyl,

natamycin, nabam, nitrothal-isopropyl, nitrostyrene, copper nonylphenol sulfonate, halacrinate, validamycin, valifenalate, harpin protein, picobenzamide, bithionol, hydroxyisoxazole, hydroxyisoxazole-potassium, binapacryl, biphenyl, hymexazol, pyracarbolid, pyrazophos, pyriofenone, pyridinitril, pyroxychlor, pyroxyfur, pyroquilon, vinclozolin, famoxadone, fenapanil, fenamidone, fenaminosulf, fenitropan, fenoxanil, ferimzone, ferbam, fentin, fenpiclonil, phthalide, buthiobate, butylamine, bupirimate, fuberidazole, blasticidin-S, furalaxyl, fluacrypyrim, fluazinam, fluotrimazole, fluopicolide, furcarbanil, furconazole, furconazole-cis, fludioxonil, flusulfamide, flutianil, furfural, furmecyclox, flumetover, flumorph, proquinazid, procymidone, prothiocarb, propamocarb, propineb, furophanate, probenazole,

hexachlorobutadiene, hexylthiofos, bethoxazin, benalaxyl, benalaxyl-M, benomyl, benquinox, benzamorf, pencycuron, benzohydroxamic acid, bentaluron, benthiazole, benthiavalicarbisopropyl, phosdiphen, fosetyl, fosetyl-Al, polyoxins, polyoxorim, polycarbamate, folpet, formaldehyde, machine oil, maneb, mancozeb, mandipropamid, myclozolin, mildiomycin, milneb, mecarbinzid, methasulfocarb, metazoxolon, metam, metam-sodium, metalaxyl, metalaxyl-M, metiram, methyl isothiocyanate, meptyldinocap, metsulfovax, methfuroxam, metrafenone, mefenoxam, meptyldinocap, mebenil, iodomethane, rabenzazole, sodium hypochlorite, wettable sulfur, calcium polysulfide, potassium hydrogen carbonate, sodium hydrogen carbonate, sulfur, inorganic fungicides such as benzalkonium chloride, copper compounds such as basic copper chloride, basic copper sulfate, copper sulfate anhydride, cupric hydroxide, oxine copper, copper sulfate pentahydrate, zinc sulfate, organic nickel (nickel dimethyldithiocarbamate), silver and the like.

Further, examples of the herbicides include 1-naphthylacetamide, 2,4-PA, 2,3,6-TBA, 2,4,5-T, 2,4,5-TB, 2,4-D, 2,4-DB, 2,4-DEB, 2,4-DEP, 3,4-DA, 3,4-DB, 3,4-DP, 4-CPA, 4-CPB, 4-CPP, MCP, MCPA, MCPA-thioethyl, MCPB, ioxynil, aclonifen, azafenidin, acifluorfen, aziprotryne, azimsulfuron, asulam, acetochlor, atrazine, atraton, anisuron, anilofos, aviglycine, abscisic acid, amicarbazone, amidosulfuron, amitrole, aminocyclopyrachlor, aminopyralid, amibuzin, amiprophos-methyl, ametridione, ametryn, alachlor, allidochlor, alloxydim, alorac, isouron, isocarbamid, isoxachlortole, isoxapyrifop, isoxaflutole, isoxaben, isocil, isonoruron, isoproturon, isopropalin, isopolinate, isomethiozin, inabenfide, ipazine, ipfencarbazone, iprymidam, imazaquin, imazapic, imazapyr, imazamethapyr, imazamethabenz, imazamethabenz-methyl, imazamox, imazethapyr, imazosulfuron, indaziflam, indanofan, indolebutyric acid, uniconazole-P, eglinazine, esprocarb, ethametsulfuron, ethametsulfuron-methyl, ethalfluralin, ethiolate, ethychlozate-ethyl, ethidimuron, etinofen, ethephon, ethoxysulfuron, ethoxyfen, etnipromid, ethofumesate, etobenzanid, epronaz, erbon, endothal, oxadiazon, oxadiargyl, oxaziclomefone, oxasulfuron, oxapyrazon, oxyfluorfen, oryzalin, orthosulfamuron, orbencarb,

cafenstrole, cambendichlor, carbasulam, carfentrazone, carfentrazone-ethyl, karbutilate, carbetamide, carboxazole, quizalofop, quizalofop-P, quizalofop-ethyl, xylachlor, quinoclamine, quinonamid, quinclorac, quinmerac, cumyluron, cliodinate, glyphosate, glufosinate, glufosinate-P, credazine, clethodim, cloxyfonac, clodinafop, clodinafop-propargyl, chlorotoluron, clopyralid, cloproxydim, cloprop, chlorbromuron, clofop, clomazone, chlomethoxynil, chlomethoxyfen, clomeprop, chlorazifop, chlorazine, cloransulam, chloranocryl, chloramben, cloransulam-methyl, chloridazon, chlorimuron, chlorimuron-ethyl, chlorsulfuron, chlorthal, chlorthiamid, chlortoluron, chlornitrofen, chlorfenac, chlorfenprop, chlorbufam, chlorflurazole, chlorflurenol, chlorprocarb, chlorpropham, chlormequat, chloreturon, chloroxynil, chloroxuron, chloropon, saflufenacil, cyanazine, cyanatryn, di-allate, diuron, diethamquat, dicamba, cycluron, cycloate, cycloxydim, diclosulam, cyclosulfamuron, dichlorprop, dichlorprop-P, dichlobenil, diclofop, diclofop-methyl, dichlormate, dichloralurea, diquat, cisanilide, disul, siduron, dithiopyr, dinitramine, cinidon-ethyl, dinosam, cinosulfuron, dinoseb, dinoterb, dinofenate, dinoprop, cyhalofop-butyl, diphenamid, difenoxuron, difenopenten, difenzoquat, cybutryne, cyprazine, cyprazole, diflufenican, diflufenzopyr, dipropetryn, cypromid, cyperquat, gibberellin, simazine, dimexano, dimethachlor, dimidazon, dimethametryn, dimethenamid, simetryn, simeton, dimepiperate, dimefuron, cinmethylin,

swep, sulglycapin, sulcotrione, sulfallate, sulfentrazone, sulfosulfuron, sulfometuron, sulfometuron-methyl, secbumeton, sethoxydim, sebuthylazine, terbacil, daimuron, dazomet, dalapon, thiazafluron, thiazopyr, thiencarbazone, thiencarbazone-methyl, tiocarbazil, tioclorim, thiobencarb, thidiazimin, thidiazuron, thifensulfuron, thifensulfuron-methyl, desmedipham, desmetryn, tetrafluron, thenylchlor, tebutam, tebuthiuron, terbumeton, tepraloxydim, tefuryltrione, tembotrione, delachlor, terbacil, terbucarb, terbuchlor, terbuthylazine, terbutryn, topramezone, tralkoxydim, triaziflam, triasulfuron, tri-allate, trietazine, tricamba, triclopyr, tridiphane, tritac, tritosulfuron, triflusulfuron, triflusulfuron-methyl, trifluralin, trifloxysulfuron, tripropindan, tribenuron-methyl, tribenuron, trifop, trifopsime, trimeturon,

naptalam, naproanilide, napropamide, nicosulfuron, nitralin, nitrofen, nitrofluorfen, nipyraclofen, neburon, norflurazon, noruron, barban, paclobutrazol, paraquat, parafluron, haloxydine, haloxyfop, haloxyfop-P, haloxyfop-methyl, halosafen, halosulfuron, halosulfuron-methyl, picloram, picolinafen, bicyclopyrone, bispyribac, bispyribac-sodium, pydanon, pinoxaden, bifenox, piperophos, hymexazol, pyraclonil, pyrasulfotole, pyrazoxyfen, pyrazosulfuron, pyrazosulfuron-ethyl, pyrazolate, bilanafos, pyraflufen-ethyl, pyriclor, pyridafol, pyrithiobac, pyrithiobac-sodium, pyridate, pyriftalid, pyribenzoxim, pyrimisulfan, primisulfuron, pyriminobac-methyl, pyroxasulfone, pyroxsulam, fenasulam, phenisopham, fenuron, fenoxasulfone, fenoxaprop, fenoxaprop-P, fenoxaprop-ethyl, phenothiol, fenoprop, phenobenzuron, fenthiaprop, fenteracol, fentrazamide, phenmedipham, phenmedipham-ethyl, butachlor, butafenacil, butamifos, buthiuron, buthidazole, butylate, buturon, butenachlor, butroxydim, butralin, flazasulfuron, flamprop, furyloxyfen, prynachlor, primisulfuron-methyl, fluazifop, fluazifop-P, fluazifop-butyl, fluazolate, fluroxypyr, fluothiuron, fluometuron, fluoroglycofen, flurochloridone, fluorodifen, fluoronitrofen, fluoromidine, flucarbazone, flucarbazone-sodium, fluchloralin, flucetosulfuron, fluthiacet, fluthiacet-methyl, flupyrsulfuron, flufenacet, flufenican, flufenpyr, flupropacil, flupropanate, flupoxam, flumioxazin, flumiclorac, flumiclorac-pentyl, flumipropyn, flumezin, fluometuron, flumetsulam, fluridone, flurtamone, fluroxypyr, pretilachlor, proxan, proglinazine, procyazine, prodiamine, prosulfalin, prosulfuron, prosulfocarb, propaquizafop, propachlor, propazine, propanil, propyzamide, propisochlor, prohydrojasmon, propyrisulfuron, propham, profluazol, profluralin, prohexadione-calcium, propoxycarbazone, propoxycarbazone-sodium, profoxydim, bromacil, brompyrazon, prometryn, prometon, bromoxynil, bromofenoxim, bromobutide, bromobonil, florasulam,

hexachloroacetone, hexazinone, pethoxamid, benazolin, penoxsulam, pebulate, beflubutamid, vernolate, perfluidone, bencarbazone, benzadox, benzipram, benzylaminopurine, benzthiazuron, benzfendizone, bensulide, bensulfuron-methyl, benzoylprop, benzobicyclon, benzofenap, benzofluor, bentazone, pentanochlor, benthiocarb, pendimethalin, pentoxazone, benfluralin, benfuresate, fosamine, fomesafen, foramsulfuron, forchlorfenuron, maleic hydrazide, mecoprop, mecoprop-P, medinoterb, mesosulfuron, mesosulfuron-methyl, mesotrione, mesoprazine, methoprotryne, metazachlor, methazole, metazosulfuron, methabenzthiazuron, metamitron, metamifop, metam, methalpropalin, methiuron, methiozolin, methiobencarb, methyldymron, metoxuron, metosulam, metsulfuron, metsulfuron-methyl, metflurazon, metobromuron, metobenzuron, methometon, metolachlor, metribuzin, mepiquat-chloride, mefenacet, mefluidide, monalide, monisouron, monuron, monochloroacetic acid, monolinuron, molinate, morfamquat, iodosulfuron, iodosulfuron-methyl-sodium, iodobonil, iodomethane, lactofen, linuron, rimsulfuron, lenacil, rhodethanil, calcium peroxide and methyl bromide.

Examples of the biopesticides include viral formulations such as nuclear polyhedrosis viruses (NPV), granulosis viruses (GV), cytoplasmic polyhedrosis viruses (CPV) and entomopox viruses (EPV); microbial pesticides used as an insecticide or a nematicide, such as *Monacrosporium phymatophagum, Steinernema carpocapsae, Steinernema kushidai* and *Pasteuria penetrans;* microbial pesticides used as a fungicide, such as *Trichoderma lignorum, Agrobacterium radiobactor,* avirulent *Erwinia carotovora* and *Bacillus subtilis;* and biopesticides used as a herbicide, such as *Xanthomonas campestris.* A combined use of the formulation of the present invention with the foregoing biopesticide as a mixture can be expected to provide the same effect as above.

Other examples of the biopesticides include natural predators such as *Encarsia formosa, Aphidius colemani, Aphidoletes aphidimyza, Diglyphus isaea, Dacnusa sibirica, Phytoseiulus persimilis, Amblyseius cucumeris* and *Orius sauteri;* microbial pesticides such as *Beauveria brongniartii;* and pheromones such as (Z)-10-tetradecenyl acetate, (E,Z)-4,10-tetradecadienyl acetate, (Z)-8-dodecenyl acetate, (Z)-11-tetradecenyl acetate, (Z)-13-icosen-10-one and 14-methyl-1-octadecene.

Each of insecticides, acaricides, nematicides, fungicides, biopesticides, herbicides and plant growth regulators as described above or any two or more memberes of them can be used in combination with the the plant disease controlling agent of the present invention.

Examples

Hereinafter, the present invention will be illustrated by Examples and Tests, but the present invention is not limited thereto.

Formulation Example 1

| | |
|---|---|
| Fluoroimide | 13 parts by mass |
| Benzovindiflupyr | 2 parts by mass |
| Hydrous silicic acid | 30 parts by mass |

HITENOL N08 (manufactured by Dai-Ichi Kogyo Seiyaku Co., Ltd.)

| | |
|---|---|
| | 5 parts by mass |
| Calcium lignosulfonate | 3 parts by mass |
| Clay for wettable powders | 47 parts by mass |

The active ingredient is impregnated with hydrous silicic acid, and then uniformly mixed with the other ingredients to give a wettable powder formulation.

Formulation Example 2

| | |
|---|---|
| Fluoroimide | 9 parts by mass |
| Fluxapyroxad | 1 parts by mass |

Mixture of bentonite powder and clay powder

| | |
|---|---|
| | 85 parts by mass |
| Calcium lignosulfonate | 5 parts by mass |

The above ingredients are uniformly mixed. After addition of an appropriate volume of water, the mixture is kneaded, granulated and dried to give a granular formulation.

Formulation Example 3

| Fluoroimide | 8 parts by mass |
| Bixafen | 2 parts by mass |
| Xylene | 70 parts by mass |
| N-methylpyrrolidone | 10 parts by mass |

Mixture of polyoxyethylene nonylphenyl ether and calcium

| alkylbenzene sulfonate | 10 parts by mass |

The above ingredients are uniformly mixed for dissolution to give an emulsifiable concentrate formulation.

Formulation Example 4

| Fluoroimide | 2.7 parts by mass |
| Prothioconazole | 0.3 parts by mass |
| Clay powder | 82 parts by mass |
| Diatomite powder | 15 parts by mass |

The above ingredients are uniformly mixed and then pulverized to give a dust formulation.

Example 1

Test for wheat leaf blotch (*Septoria tritici,* KUK-1-21 strain) :

Agrochemical liquids containing a predetermined concentration of fluoroimide and/or a predetermined concentration of each DMI agent were applied to wheat in a predetermined amount with a spray gun. After air drying, a suspension of fungus spore of *Septoria tritici* adjusted to $1.0 \times 10^7$ spores/ml was inoculated by spraying. After that, the wheat pots were kept in a growth chamber under a light condition of at 15°C 100% RH to encourage the development of the disease. Seventeen days after the inoculation, the lesion area index (0-10) was determined for the evaluation of the control effect. The results are shown in Table 1.

Criterion of disease index

| 0: | no lesion |
| 1: | lesion area 1-10% |
| 2: | lesion area 11-20% |
| 3: | lesion area 21-30% |
| 4: | lesion area 31-40% |
| 5: | lesion area 41-50% |
| 6: | lesion area 51-60% |
| 7: | lesion area 61-70% |
| 8: | lesion area 71-80% |
| 9: | lesion area 81-90% |
| 10: | lesion area 91-100%. |

[Formula 1]

Control effect (%)

= [(Disease index of no treatment area - Disease index of

treatment area) / Disease index of no treatment area]×100

The expected effect (expected value E) by using an active ingredient in combination with each of other active ingredients in the above tests was determined by the following Colby formula (see COLBY, S. R., Weeds 15: 20-22 (1967)).

[Formula 2]

E(Expected effect) = (X+Y) - (X×Y/100)

X = controlling effect of fungicide A alone

Y = controlling effect of fungicide B alone

The values of the expected value E are also shown in Table 1.

[Table 1]

| fluoroimide | Concentration (ppm) | 0 | 50 | 100 | 50 | 100 |
|---|---|---|---|---|---|---|
| | Controlling Effect as single agent | 0 | 25 | 50 | 25 | 50 |
| DMI agent | Each DMI agent concentration (ppm) | Controlling effect | | | Expected value | |
| | | DMI alone | Combination with fluoroimide | | | |
| propiconazole | 10 | 11 | 89 | 100 | 33 | 56 |
| | 3 | 28 | 89 | 94 | 46 | 64 |
| | 1 | 0 | 62 | 72 | 25 | 50 |
| tebuconazole | 10 | 61 | 89 | 94 | 71 | 81 |
| | 3 | 44 | 68 | 94 | 58 | 72 |
| | 1 | 6 | 62 | 67 | 30 | 53 |
| difenoconazole | 10 | 61 | 89 | 100 | 71 | 81 |
| | 3 | 61 | 89 | 89 | 71 | 81 |
| | 1 | 0 | 52 | 94 | 25 | 50 |
| metconazole | 10 | 89 | 95 | 89 | 92 | 95 |
| | 3 | 28 | 84 | 89 | 46 | 64 |
| | 1 | 6 | 68 | 78 | 30 | 53 |
| prochloraz | 10 | 6 | 62 | 67 | 30 | 53 |
| | 3 | 11 | 41 | 72 | 33 | 56 |
| | 1 | 0 | 57 | 72 | 25 | 50 |
| epoxiconazole | 10 | 61 | 84 | 83 | 71 | 81 |
| | 3 | 50 | 62 | 83 | 63 | 75 |
| | 1 | 0 | 19 | 72 | 25 | 50 |

(continued)

| | | | | | | |
|---|---|---|---|---|---|---|
| prothioconazole | 10 | 0 | 73 | 67 | 25 | 50 |
| | 3 | 0 | 30 | 72 | 25 | 50 |
| | 1 | 0 | 3 | 61 | 25 | 50 |
| Untreated control (disease index) | | (9) | (9.3) | (9) | | |

Synergistic effect of each combinations of fluoroimide and each of the DMI agents was observed in each of the test. The effect was higher than the expected effect (expected value) estimated from the each single effects of fluoroimide and DMI agent.

Therefore, it was suggested that a sterol biosynthesis inhibitor (SBI agent) typified by a DMI agent exhibits synergistic fungicidal action when combined with fluoroimide.

Example 2

Test for wheat leaf blotch (*Septoria tritici,* KUK-1-21 strain):

Agrochemical liquids containing a predetermined concentration of fluoroimide and/or a predetermined concentration of each SDHI agent were applied to wheat in a predetermined amount with a spray gun. After air drying, a suspension of fungus spore of *Septoria tritici* adjusted to $1.0 \times 10^7$ spores/ml was inoculated by spraying. After that, the wheat pots were kept in a growth chamber under a light condition of at 15°C 100% RH to encourage the development of the disease. Twenty-one days after the inoculation, the lesion area index (0-10) was set and the controlling effects and expected values are examined in the same manner as Example 1. The results are shown in Table 2.

[Table 2]

| fluoroimide | Concentration (ppm) Controlling Effect as single agent | 0 | 50 | 100 | 50 | 100 |
|---|---|---|---|---|---|---|
| | | 0 | 5 | 25 | 5 | 25 |
| SDHIagent | Each SDHI agent Concentration (ppm) | Controlling effect | | | Expected value | |
| | | SDHI alone | Combination with fluoroimide | | | |
| boscalid | 10 | 60 | 100 | 95 | 62 | 70 |
| | 3 | 15 | 65 | 80 | 19 | 36 |
| | 1 | 5 | 15 | 0 | 10 | 29 |
| fluxapyroxad | 10 | 100 | 100 | 100 | 100 | 100 |
| | 3 | 95 | 90 | 100 | 95 | 96 |
| | 1 | 0 | 15 | 50 | 5 | 25 |
| bixafen | 10 | 100 | 100 | 100 | 100 | 100 |
| | 3 | 85 | 100 | 90 | 86 | 89 |
| | 1 | 75 | 95 | 85 | 76 | 81 |
| isopyrazam | 10 | 100 | 100 | 100 | 100 | 100 |
| | 3 | 75 | 85 | 85 | 76 | 81 |
| | 1 | 15 | 60 | 20 | 19 | 36 |
| Untreated control (disease index) | | (10) | (10) | (10) | | |

Synergistic effect of each combinations of fluoroimide and each of the SDHI agents was observed in each of the test. The effect was higher than the expected effect (expected value) estimated from the each single effects of fluoroimide and SDHI agent.

Therefore, it was suggested that a respiratory inhibitor such as a QoI agent typified by SDHI agent exhibits a synergistic fungicidal action when combined with fluoroimide.

Industrial Applicability

The plant disease controlling agent of the present invention not only exhibits an excellent controlling effect on leaf blotch diseases that inhibit the stable production of cereals in Europe, but also is effective against other diseases. Therefore, the plant disease control agent of the present invention is highly applicable to the technical field.

**Claims**

1.  Use of fluoroimide or an agrochemically acceptable salt thereof and one or more compounds selected from the group consisting of (1) SBI agents, and (2) SDHI agents or agrochemically acceptable salts thereof for controlling cereal plant diseases,
    wherein the SBI agent is one or more DMI agents selected from the group consisting of:

    an imidazole, which is prochloraz; and
    at least one triazole selected from the group consisting of propiconazole, tebuconazole, difenoconazole, metconazole, epoxiconazole and prothioconazole, and

    the SDHI agent is one or more compounds selected from the group consisting of:

    at least one pyrazole carboxamide selected from the group consisting of bixafen, fluxapyroxad and isopyrazam; and
    a pyridine carboxamide, which is boscalid.

2.  The use according to claim 1, wherein the cereal plant is at least one selected from the group consisting of wheat and barley.

3.  The use according to claim 1 or 2, wherein the cereal plant disease pathogen is at least one selected from the group consisting of:

    (a1) *Ascochyta tritici,* a causal agent of Ascochyta leaf spot of wheat,
    (a2) *Blumeria graminis,* a causal agent of powdery mildew of cereals,
    (a3) *Cladosporium herbarum,* a causal agent of black mold,
    (a4) *Cochliobolus sativus,* a causal agent of poaceous spot blotch,
    (a5) *Epicoccum* spp., a causal agent of glume spot,
    (a6) *Erysiphe graminis,* a causal agent of powdery mildew of wheat and barley,
    (a7) *Fusarium graminearum,* a causal agent of Fusarium ear blight of wheat and barley,
    (a8) *Fusarium culmorum,* a causal agent of root rot,
    (a9) *Gaeumannomyces graminis,* a causal agent of take-all root rot,
    (a10) *Leptosphaeria nodorum,* a causal agent of glume blotch,
    (a11) *Microdochium nivale,* a causal agent of pink snow mold,
    (a12) *Pseudocercospora herpotrichoides,*
    (a13) *Pseudocercosporella herpotrichoides,* a causal agent of eyespot,
    (a14) *Puccinia striiformis,* a causal agent of rust,
    (a15) *Puccinia triticina,* a causal agent of leaf rust,
    (a16) *Puccinia hordei,* a causal agent of dwarf leaf rust of barley,
    (a17) *Puccinia recondita,* a causal agent of leaf rust of wheat,
    (a18) *Pyrenophora graminea,* a causal agent of stripe,
    (a19) *Pyrenophora teres,* a causal agent of net blotch,
    (a20) *Pyrenophora tritici repentis,* a causal agent of yellow leaf spot of wheat,
    (a21) *Ramularia collo-cygni,* a causal agent of physiological leaf spots,
    (a22) *Rhizoctonia solani,* a causal agent of root rot/stem rot,
    (a23) *Rhizoctonia cerealis,* a causal agent of yellow patch,
    (a24) *Rhynchosporium secalis,* a causal agent of scald,
    (a25) *Septoria nodorum,* a causal agent of glume blotch of wheat,

(a26) *Septoria tritici,* a causal agent of wheat leaf blotch,
(a27) *Stagonospora nodorum,* a species of the class Loculoascomycetes,
(a28) *Tilletia caries,* a causal agent of stinking smut,
(a29) *Typhula incarnata,* a causal agent of snow mold,
(a30) *Ustilago avenae,* a causal agent of loose smut of oat and
(a31) *Ustilago nuda,* a causal agent of loose smut of wheat.

4. The use according to claim 1 or 2, wherein the cereal plant disease pathogen is at least one selected from the group consisting of:

(a3) *Cladosporium herbarum,* a causal agent of black mold,
(a4) *Cochliobolus sativus,* a causal agent of poaceous spot blotch,
(a5) *Epicoccum* spp., a causal agent of glume spot,
(a7) *Fusarium graminearum,* a causal agent of Fusarium ear blight of wheat and barley,
(a8) *Fusarium culmorum,* a causal agent of root rot,
(a9) *Gaeumannomyces graminis,* a causal agent of take-all root rot,
(a10) *Leptosphaeria nodorum,* a causal agent of glume blotch,
(a11) *Microdochium nivale,* a causal agent of pink snow mold,
(a12) *Pseudocercospora herpotrichoides,*
(a13) *Pseudocercosporella herpotrichoides,* a causal agent of eyespot,
(a18) *Pyrenophora graminea,* a causal agent of stripe,
(a19) *Pyrenophora teres,* a causal agent of net blotch,
(a20) *Pyrenophora tritici repentis,* a causal agent of yellow leaf spot of wheat,
(a21) *Ramularia collo-cygni,* a causal agent of physiological leaf spots,
(a24) *Rhynchosporium secalis,* a causal agent of scald,
(a25) *Septoria nodorum,* a causal agent of glume blotch of wheat,
(a26) *Septoria tritici,* a causal agent of wheat leaf blotch,
(a27) *Stagonospora nodorum,* a species of the class Loculoascomycetes,
(a28) *Tilletia caries,* a causal agent of stinking smut,
(a29) *Typhula incarnata,* a causal agent of snow mold,
(a30) *Ustilago avenae,* a causal agent of loose smut of oat and
(a31) *Ustilago nuda,* a causal agent of loose smut of wheat.

5. The use according to claim 1 or 2, wherein the cereal plant disease pathogen is at least one selected from the group consisting of:

(a7) *Fusarium graminearum,* a causal agent of Fusarium ear blight of wheat and barley,
(a10) *Leptosphaeria nodorum,* a causal agent of glume blotch,
(a12) *Pseudocercospora herpotrichoides,*
(a13) *Pseudocercosporella herpotrichoides,* a causal agent of eyespot,
(a25) *Septoria nodorum,* a causal agent of glume blotch of wheat and
(a26) *Septoria tritici,* a causal agent of leaf blotch.

6. The use according to claim 1 or 2, wherein the cereal plant disease pathogen is at least one selected from *Septoria* spp.

7. The use according to claim 1 or 2, wherein the cereal plant disease pathogen is *Septoria tritici,* a causal agent of leaf blotch.

8. A method for controlling cereal plant diseases comprising
applying fluoroimide or an agrochemically acceptable salt thereof and one or more compounds selected from the group consisting of (1) SBI agents, and (2) SDHI agents or agrochemically acceptable salts thereof to at least one selected from the group consisting of a cereal plant, soil in the vicinity of the cereal plant grown and a seed of the cereal plant,
wherein the SBI agent is one or more DMI agents selected from the group consisting of:

an imidazole, which is prochloraz; and
at least one triazole selected from the group consisting of propiconazole, tebuconazole, difenoconazole, metconazole, epoxiconazole and prothioconazole, and

the SDHI agent is one or more compounds selected from the group consisting of:

at least one pyrazole carboxamide selected from the group consisting of bixafen, fluxapyroxad and isopyrazam; and

a pyridine carboxamide, which is boscalid.

9. The method according to claim 8, wherein the cereal plant is at least one selected from the group consisting of wheat and barley.

10. The method according to claim 8 or 9, wherein the application is foliar application.

11. A method for controlling cereal plant diseases according to any one of claims 8 to 10, comprising applying agents for controlling cereal plant diseases to at least one selected from the group consisting of a cereal plant, soil in the vicinity of the cereal plant grown and a seed of the cereal plant at the same time or with a time lag, wherein one agent is fluoroimide or an agrochemically acceptable salt thereof and the other agent is an agent containing one or more compounds selected from the group consisting of (1) SBI agents, and (2) SDHI agents or agrochemically acceptable salts thereof, and wherein the SBI agent is one or more DMI agents selected from the group consisting of: an imidazole, which is prochloraz; and at least one triazole selected from the group consisting of propiconazole, tebuconazole, difenoconazole, metconazole, epoxiconazole and prothioconazole, and the SDHI agent is one or more compounds selected from the group consisting of: at least one pyrazole carboxamide selected from the group consisting of bixafen, fluxapyroxad and isopyrazam; and a pyridine carboxamide, which is boscalid.

**Patentansprüche**

1. Verwendung von Fluorimid oder einem agrochemisch verträglichen Salz davon und einer oder mehreren Verbindungen, ausgewählt aus der Gruppe bestehend aus (1) SBI-Mitteln und (2) SDHI-Mitteln oder agrochemisch verträglichen Salzen davon, zur Bekämpfung von Getreidepflanzenkrankheiten, wobei das SBI-Mittel ein oder mehrere DMI-Mittel ist, ausgewählt aus der Gruppe bestehend aus:

einem Imidazol, das Prochloraz ist; und

mindestens einem Triazol, ausgewählt aus der Gruppe bestehend aus Propiconazol, Tebuconazol, Difenoconazol, Metconazol, Epoxiconazol und Prothioconazol, und das SDHI-Mittel eine oder mehrere Verbindungen ist, ausgewählt aus der Gruppe bestehend aus:

mindestens einem Pyrazolcarboxamid, ausgewählt aus der Gruppe bestehend aus Bixafen, Fluxapyroxad und Isopyrazam; und

einem Pyridincarboxamid, das Boscalid ist.

2. Die Verwendung nach Anspruch 1, wobei die Getreidepflanze mindestens eine ist, die aus der Gruppe bestehend aus Weizen und Gerste ausgewählt ist.

3. Die Verwendung nach Anspruch 1 oder 2, wobei der Getreidepflanzenkrankheitserreger mindestens einer ist, ausgewählt aus der Gruppe bestehend aus:

(a1) *Ascochyta tritici,* ein Erreger der Ascochyta-Blattfleckenkrankheit des Weizens,

(a2) *Blumeria graminis,* ein Erreger des Echten Mehltaus von Getreide,

(a3) *Cladosporium herbarum,* ein Erreger von Schwarzschimmel,

(a4) *Cochliobolus sativus,* ein Erreger der "poaceous spot blotch" Krankheit,

(a5) *Epicoccum spp.,* ein Erreger der Spelzenbräune,

(a6) *Erysiphe graminis,* ein Erreger des Echten Mehltaus an Weizen und Gerste,

(a7) *Fusarium graminearum,* ein Erreger der Fusarium-Ährenfäule bei Weizen und Gerste,

(a8) *Fusarium culmorum,* ein Erreger der Wurzelfäule,

(a9) *Gaeumannomyces graminis,* ein Erreger der Schwarzbeinigkeit,

(a10) *Leptosphaeria nodorum,* ein Erreger der Spelzenbräune,

(a11) *Microdochium nivale,* ein Erreger des rosa Schneeschimmels,

(a12) *Pseudocercospora herpotrichoides,*

(a13) *Pseudocercosporella herpotrichoides,* ein Erreger der Halmbruchkrankheit,

(a14) *Puccinia striiformis,* ein Erreger von Gelbrost,

(a15) *Puccinia triticina,* ein Erreger von Braunrost,

(a16) *Puccinia hordei,* ein Erreger des Zwergrostes der Gerste,

(a17) *Puccinia recondita,* ein Erreger des Braunrostes bei Weizen,

(a18) *Pyrenophora graminea,* ein Erreger der Streifenkrankheit,

(a19) *Pyrenophora teres,* ein Erreger der Netzfleckenkrankheit,

(a20) *Pyrenophora tritici repentis,* ein Erreger der Weizenblattdürre,

(a21) *Ramularia collo-cygni,* ein Erreger der Sprenkelnekrose,

(a22) *Rhizoctonia solani,* ein Erreger der Wurzeltöterkrankheit/Weißhosigkeit,

(a23) *Rhizoctonia cerealis,* ein Erreger des Scharfen Augenflecks,

(a24) *Rhynchosporium secalis,* ein Erreger der Bräune,

(a25) *Septoria nodorum,* ein Erreger der Blatt- und Spelzenfäule bei Weizen,

(a26) *Septoria tritici,* ein Erreger der Blattfleckenkrankheit des Weizens,

(a27) *Stagonospora nodorum,* eine Art aus der Klasse der Loculoascomycetes,

(a28) *Tilletia caries,* ein Erreger des Stein- oder Stinkbrands,

(a29) *Typhula incarnata,* ein Erreger des Schneeschimmels,

(a30) *Ustilago avenae,* ein Erreger des Haferflugbrands, und

(a31) *Ustilago nuda,* ein Erreger von Flugbrand bei Weizen.

**4.** Verwendung nach Anspruch 1 oder 2, wobei der Getreidepflanzenkrankheitserreger mindestens einer ist, ausgewählt aus der Gruppe bestehend aus:

(a3) *Cladosporium herbarum,* ein Erreger von Schwarzschimmel,

(a4) *Cochliobolus sativus,* ein Erreger der "poaceous spot blotch" Krankheit,

(a5) *Epicoccum spp.,* ein Erreger der Spelzenbräune,

(a7) *Fusarium graminearum,* ein Erreger der Fusarium-Ährenfäule bei Weizen und Gerste,

(a8) *Fusarium culmorum,* ein Erreger der Wurzelfäule,

(a9) *Gaeumannomyces graminis,* ein Erreger der Schwarzbeinigkeit,

(a10) *Leptosphaeria nodorum,* ein Erreger der Spelzenbräune,

(a11) *Microdochium nivale,* ein Erreger des rosa Schneeschimmels,

(a12) *Pseudocercospora herpotrichoides,*

(a13) *Pseudocercosporella herpotrichoides,* ein Erreger der Halmbruchkrankheit,

(a18) *Pyrenophora graminea,* ein Erreger der Streifenkrankheit,

(a19) *Pyrenophora teres,* ein Erreger der Netzfleckenkrankheit,

(a20) *Pyrenophora tritici repentis,* ein Erreger der Weizenblattdürre,

(a21) *Ramularia collo-cygni,* ein Erreger der Sprenkelnekrose,

(a24) *Rhynchosporium secalis,* ein Erreger der Bräune,

(a25) *Septoria nodorum,* ein Erreger der Blatt- und Spelzenfäule bei Weizen,

(a26) *Septoria tritici,* ein Erreger der Blattfleckenkrankheit des Weizens,

(a27) *Stagonospora nodorum,* eine Art aus der Klasse der Loculoascomycetes,

(a28) *Tilletia caries,* ein Erreger des Stein- oder Stinkbrands,

(a29) *Typhula incarnata,* ein Erreger des Schneeschimmels,

(a30) *Ustilago avenae,* ein Erreger des Haferflugbrands, und

(a31) *Ustilago nuda,* ein Erreger von Flugbrand bei Weizen.

**5.** Die Verwendung nach Anspruch 1 oder 2, wobei der Getreidepflanzenkrankheitserreger mindestens einer ist, ausgewählt aus der Gruppe bestehend aus:

(a7) *Fusarium graminearum,* ein Erreger der Fusarium-Ährenfäule bei Weizen und Gerste,

(a10) *Leptosphaeria nodorum,* ein Erreger der Spelzenbräune,

(a12) *Pseudocercospora herpotrichoides,*

(a13) *Pseudocercosporella herpotrichoides,* ein Erreger der Halmbruchkrankheit,

(a25) *Septoria nodorum,* ein Erreger der Blatt- und Spelzenfäule bei Weizen, und

(a26) *Septoria tritici,* ein Erreger der Blattfleckenkrankheit.

6. Die Verwendung nach Anspruch 1 oder 2, wobei der Getreidepflanzenkrankheitserreger mindestens einer ist, ausgewählt aus *Septoria* spp.

7. Die Verwendung nach Anspruch 1 oder 2, wobei der Getreidepflanzenkrankheitserreger *Septoria tritici,* ein Erreger der Blattfleckenkrankheit, ist.

8. Verfahren zur Bekämpfung von Getreidepflanzenkrankheiten, umfassend das Aufbringen von Fluorimid oder eines agrochemisch verträglichen Salzes davon und einer oder mehrerer Verbindungen, ausgewählt aus der Gruppe bestehend aus (1) SBI-Mitteln und (2) SDHI-Mitteln oder agrochemisch veträglichen Salzen davon, auf mindestens eines, ausgewählt aus der Gruppe bestehend aus einer Getreidepflanze, dem Boden in der Umgebung der angebauten Getreidepflanze und einem Samen der Getreidepflanze,
wobei das SBI-Mittel ein oder mehrere DMI-Mittel ist, ausgewählt aus der Gruppe bestehend aus
einem Imidazol, das Prochloraz ist; und
mindestens einem Triazol, ausgewählt aus der Gruppe bestehend aus Propiconazol, Tebuconazol, Difenoconazol, Metconazol, Epoxiconazol und Prothioconazol, und das SDHI-Mittel eine oder mehrere Verbindungen ist, ausgewählt aus der Gruppe bestehend aus
mindestens einem Pyrazolcarboxamid, ausgewählt aus der Gruppe bestehend aus Bixafen, Fluxapyroxad und Isopyrazam; und
einem Pyridincarboxamid, das Boscalid ist.

9. Das Verfahren nach Anspruch 8, wobei die Getreidepflanze mindestens eine ist, die aus der Gruppe bestehend aus Weizen und Gerste ausgewählt ist.

10. Das Verfahren nach Anspruch 8 oder 9, wobei die Anwendung eine Blattapplikation ist.

11. Verfahren zur Bekämpfung von Getreidepflanzenkrankheiten nach einem der Ansprüche 8 bis 10, umfassend das Aufbringen von Mitteln zur Bekämpfung von Getreidepflanzenkrankheiten auf mindestens eines, ausgewählt aus der Gruppe bestehend aus einer Getreidepflanze, dem Boden in der Umgebung der angebauten Getreidepflanze und einem Samen der Getreidepflanze, zur gleichen Zeit oder zeitlich versetzt,
wobei ein Mittel Fluorimid oder ein agrochemisch verträgliches Salz davon ist und das andere Mittel ein Mittel ist, das eine oder mehrere Verbindungen enthält, die aus der Gruppe ausgewählt sind, die aus (1) SBI-Mitteln und (2) SDHI-Mitteln oder agrochemisch verträglichen Salzen davon besteht, und
wobei das SBI-Mittel ein oder mehrere DMI-Mittel ist, ausgewählt aus der Gruppe bestehend aus
einem Imidazol, das Prochloraz ist; und
mindestens einem Triazol, ausgewählt aus der Gruppe bestehend aus Propiconazol, Tebuconazol, Difenoconazol, Metconazol, Epoxiconazol und Prothioconazol, und
das SDHI-Mittel eine oder mehrere Verbindungen ist, ausgewählt aus der Gruppe bestehend aus
mindestens einem Pyrazolcarboxamid, ausgewählt aus der Gruppe bestehend aus Bixafen, Fluxapyroxad und Isopyrazam; und
einem Pyridincarboxamid, das Boscalid ist.


**Revendications**

1. Utilisation de fluoroimide ou d'un sel agrochimiquement acceptable de celui-ci et d'un ou plusieurs composés sélectionnés dans le groupe constitué (1) des agents SBI, et (2) des agents SDHI ou de leurs sels agrochimiquement acceptables pour la régulation des maladies des plantes céréalières,
l'agent SBI étant l'un ou plusieurs agents DMI sélectionnés dans le groupe constitué :

d'un imidazole, qui est le prochloraz ; et
d'au moins un triazole sélectionné dans le groupe constitué du propiconazole, tébuconazole, diténoconazole, metconazole, époxiconazole et prothioconazole, et

l'agent SDHI étant l'un ou plusieurs composés sélectionnés dans le groupe constitué :

d'au moins un pyrazole carboxamide sélectionné dans le groupe constitué du bixafen, fluxapyroxad et isopyrazam ; et
d'un pyridine carboxamide, qui est le boscalide.

**2.** Utilisation selon la revendication 1, la plante céréalière étant au moins l'une sélectionnée dans le groupe constitué du blé et de l'orge.

**3.** Utilisation selon la revendication 1 ou 2, le pathogène de maladie de plante céréalière étant au moins l'un sélectionné dans le groupe constitué de :

(a1) *Ascochyta tritici,* un agent causal de la tache des feuilles par *Ascochyta* sur le blé,
(a2) *Blumeria graminis,* un agent causal de l'oïdium des céréales,
(a3) *Cladosporium herbarum,* un agent causal de la moisissure noire,
(a4) *Cochliobolus sativus,* un agent causal de la tache helminthosporienne des poacées,
(a5) *Epicoccum* spp., un agent causal de la tache des glumes,
(a6) *Erysiphe graminis,* un agent causal de l'oïdium du blé et de l'orge,
(a7) *Fusarium graminearum,* un agent causal de la fusariose de l'épi par le *Fusarium* sur le blé et l'orge,
(a8) *Fusarium culmorum,* un agent causal de la pourriture racinaire,
(a9) *Gaeumannomyces graminis,* un agent causal du piétin-échaudage du gazon,
(a10) *Leptosphaeria nodorum,* un agent causal de la tache des glumes,
(a11) *Microdochium nivale,* un agent causal de la moisissure des neiges,
(a12) *Pseudocercospora herpotrichoides,*
(a13) *Pseudocercosporella herpotrichoides,* un agent causal du piétin-verse,
(a14) *Puccinia striiformis,* un agent causal de la rouille,
(al5) *Puccinia triticina,* un agent causal de la rouille foliaire,
(a16) *Puccinia hordei,* un agent causal de la rouille naine de l'orge,
(a17) *Puccinia recondita,* un agent causal de la rouille foliaire du blé,
(al8) *Pyrenophora graminea,* un agent causal des stries,
(a19) *Pyrenophora teres,* un agent causal des taches réticulées,
(a20) *Pyrenophora tritici repentis,* un agent causal des taches jaunes sur le blé,
(a21) *Ramularia collo-cygni,* un agent causal des taches foliaires physiologiques,
(a22) *Rhizoctonia solani,* un agent causal de la pourriture racinaire/pourriture de la tige,
(a23) *Rhizoctonia cerealis,* un agent causal des taches jaunes,
(a24) *Rhynchosporium secalis,* un agent causal de la rhynchosporiose,
(a25) *Septoria nodorum,* un agent causal de la tache des glumes sur le blé,
(a26) *Septoria tritici,* un agent causal du brunissement foliaire,
(a27) *Stagonospora nodorum,* une espèce de la classe des *Loculoascomycetes,*
(a28) *Tilletia caries,* un agent causal de la carie commune,
(a29) *Typhula incarnata,* un agent causal de la moisissure nivéale,
(a30) *Ustilago avenae,* un agent causal du charbon nu de l'avoine et
(a31) *Ustilago nuda,* un agent causal du charbon nu du blé.

**4.** Utilisation selon la revendication 1 ou 2, le pathogène de maladie de plante céréalière étant au moins l'un sélectionné dans le groupe constitué de :

(a3) *Cladosporium herbarum,* un agent causal de la moisissure noire,
(a4) *Cochliobolus sativus,* un agent causal de la tache helminthosporienne des poacées,
(a5) *Epicoccum spp.,* un agent causal de la tache des glumes,
(a7) *Fusarium graminearum,* un agent causal de la fusariose de l'épi par le Fusarium sur le blé et l'orge,
(a8) *Fusarium culmorum,* un agent causal de la pourriture racinaire,
(a9) *Gaeumannomyces graminis,* un agent causal du piétin-échaudage du gazon,
(a10) *Leptosphaeria nodorum,* un agent causal de la tache des glumes,
(a11) *Microdochium nivale,* un agent causal de la moisissure des neiges,
(a12) *Pseudocercospora herpotrichoides,*
(a13) *Pseudocercosporella herpotrichoides,* un agent causal du piétin-verse,
(al8) *Pyrenophora graminea,* un agent causal des stries,
(a19) *Pyrenophora teres,* un agent causal des taches réticulées,
(a20) *Pyrenophora tritici repentis,* un agent causal des taches jaunes sur le blé,
(a21) *Ramularia collo-cygni,* un agent causal des taches foliaires physiologiques,
(a24) *Rhynchosporium secalis,* un agent causal de la rhynchosporiose,
(a25) *Septoria nodorum,* un agent causal de la tache des glumes sur le blé,
(a26) *Septoria tritici,* un agent causal du brunissement foliaire,

(a27) *Stagonospora nodorum,* une espèce de la classe des *Loculoascomycetes,*

(a28) *Tilletia caries,* un agent causal de la carie commune,

(a29) *Typhula incarnata,* un agent causal de la moisissure nivéale,

(a30) *Ustilago avenae,* un agent causal du charbon nu de l'avoine et

(a31) *Ustilago nuda,* un agent causal du charbon nu du blé.

5. Utilisation selon la revendication 1 ou 2, le pathogène de maladie de plante céréalière étant au moins l'un sélectionné dans le groupe constitué de :

(a7) *Fusarium graminearum,* un agent causal de la fusariose de l'épi par le *Fusarium* sur le blé et l'orge,

(a10) *Leptosphaeria nodorum,* un agent causal de la tache des glumes,

(a12) *Pseudocercospora herpotrichoides,*

(a13) *Pseudocercosporella herpotrichoides,* un agent causal du piétin-verse,

(a25) *Septoria nodorum,* un agent causal de la tache des glumes sur le blé et

(a26) *Septoria tritici,* un agent causal du brunissement foliaire.

6. Utilisation selon la revendication 1 ou 2, le pathogène de maladie de plante céréalière étant au moins l'un sélectionné parmi *Septoria* spp.

7. Utilisation selon la revendication 1 ou 2, le pathogène de maladie de plante céréalière étant *Septoria tritici,* un agent causal du brunissement foliaire.

8. Procédé de régulation de maladies de plantes céréalières comprenant
l'application de fluoroimide ou d'un sel agrochimiquement acceptable de celui-ci et d'un ou plusieurs composés sélectionnés dans le groupe constitué (1) des agents SBI, et (2) des agents SDHI ou de leurs sels agrochimiquement acceptables à au moins l'un sélectionné parmi le groupe constitué d'une plante céréalière, du sol à proximité de la plante céréalière cultivée et d'une semence de la plante céréalière,
l'agent SBI étant l'un ou plusieurs agents DMI sélectionnés dans le groupe constitué :

d'un imidazole, qui est le prochloraz ; et
d'au moins un triazole sélectionné dans le groupe constitué du propiconazole, tébuconazole, difénoconazole, metconazole, époxiconazole et prothioconazole, et

l'agent SDHI étant l'un ou plusieurs composés sélectionnés dans le groupe constitué :

d'au moins un pyrazole carboxamide sélectionné dans le groupe constitué du bixafen, fluxapyroxad et isopyrazam ; et
d'un pyridine carboxamide, qui est le boscalide.

9. Procédé selon la revendication 8, la plante céréalière étant au moins l'une sélectionnée dans le groupe constitué du blé et de l'orge.

10. Procédé selon la revendication 8 ou 9, l'application étant l'application foliaire.

11. Procédé de régulation de maladies de plantes céréalières selon l'une quelconque des revendications 8 à 10, comprenant l'application d'agents de régulation des maladies des plantes céréalières à au moins l'un sélectionné parmi le groupe constitué d'une plante céréalière, du sol à proximité de la plante céréalière cultivée et d'une semence de la plante céréalière simultanément ou avec un intervalle de temps,
un agent étant le fluoroimide ou un sel agrochimiquement acceptable de celui-ci et l'autre agent étant un agent contenant un ou plusieurs composés sélectionnés dans le groupe constitué (1) des agents SBI, et (2) des agents SDHI ou de leurs sels agrochimiquement acceptables, et
l'agent SBI étant un ou plusieurs agents DMI sélectionnés dans le groupe constitué :

d'un imidazole, qui est le prochloraz ; et
d'au moins un triazole sélectionné dans le groupe constitué du propiconazole, tébuconazole, difénoconazole, metconazole, époxiconazole et prothioconazole, et

l'agent SDHI étant un ou plusieurs composés sélectionnés dans le groupe constitué :

d'au moins un pyrazole carboxamide sélectionné dans le groupe constitué du bixafen, fluxapyroxad et isopyrazam ; et
d'un pyridine carboxamide, qui est le boscalide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010029030 A
- WO 2014066120 A
- JP 2011201858 A
- WO 2012077077 A
- US 3734927 A
- EP 0374753 A
- WO 9307278 A
- WO 9534656 A
- EP 0427529 A
- EP 451878 A
- WO 03052073 A

**Non-patent literature cited in the description**

- **K. STENZEL.** EPPO Workshop on Azole fungicides and Septoria leaf blotch control. *European and Mediterranean Plant Protection Organization,* December 2010
- The Pesticide Manual. British Crop Production Council, 2013
- *Proc. Natl. Acad. Sci. USA,* 1990, vol. 87, 7175-7179
- *Weed Science,* 2005, vol. 53, 728-746
- **GURA T.** Repairing the Genome's Spelling Mistakes. *Science,* 1999, vol. 285, 316-318
- **COLBY, S. R.** *Weeds,* 1967, vol. 15, 20-22